# EUROPÄISCHE PATENTANMELDUNG

(11) **EP 4 596 618 A2**
(43) Veröffentlichungstag der Anmeldung: **06.08.2025**
(21) Anmeldenummer: 25184214.2
(22) Anmeldetag: 23.08.2022
(51) Int. Cl.: C08L 23/16

(54) **PEROXID-VERNETZBARE KAUTSCHUKZUSAMMENSETZUNGEN ENTHALTEND ORGANISCHE FÜLLSTOFFE**

(30) Priorität: 23.08.2021 EP 21192648; 28.09.2021 EP 21199589
(62) Teilanmeldung aus: 22768779.5
(71) Anmelder: SunCoal Industries GmbH, 14974 Ludwigsfelde (DE)
(72) Erfinder: STÜCKER, Alexander, 14974 Ludwigsfelde (DE); SCHMAUCKS, Gerd, 14974 Ludwigsfelde (DE); WITTMANN, Tobias, 14974 Ludwigsfelde (DE); PODSCHUN, Jacob, 14974 Ludwigsfelde (DE); SCHWAIGER, Bernhard, 50374 Erfstadt (DE)
(74) Vertreter: Steffan & Kiehne Patentanwälte PartG mbB

(57) **Zusammenfassung**

Die vorliegende Erfindung betrifft eine vulkanisierbare Kautschukzusammensetzung umfassend ein Vulkanisations-System VS, welches wenigstens ein Peroxid umfasst, eine Kautschukkomponente K enthaltend wenigstens einen Kautschuk, welcher mittels des wenigstens einen Peroxids des VS vernetzbar ist, und eine Füllstoffkomponente F, welche wenigstens einen organischen Füllstoff enthält, welcher einen ¹⁴C-Gehalt in einem Bereich von 0,20 bis 0,45 Bq/g Kohlenstoff und einen d99-Wert von <25,0 µm aufweist, ein Kit-of-parts umfassend als Teil (A) eine Kautschukzusammensetzung enthaltend vorgenannte Komponenten K und F und als Teil (B) das Vulkanisations-System VS umfassend wenigstens das wenigstens eine Peroxid, jeweils daraus erhältliche vulkanisierte Kautschukzusammensetzungen, eine Verwendung eines der vorgenannten Produkte zum Einsatz bei der Herstellung von technischen Gummiartikeln, vorzugsweise mit Dichtfunktion, entsprechende technische Gummiartikel als solche, vorzugsweise mit Dichtfunktion, sowie eine Verwendung des organischen Füllstoffs zur Erhöhung der Bruchdehnung und gleichzeitiger Erniedrigung des Druckverformungsrestes in vulkanisierten Kautschukzusammensetzungen.

## Beschreibung

Die vorliegende Erfindung betrifft eine vulkanisierbare Kautschukzusammensetzung umfassend ein Vulkanisations-System VS, welches wenigstens ein Peroxid umfasst, eine Kautschukkomponente K enthaltend wenigstens einen Kautschuk, welcher mittels des wenigstens einen Peroxids des VS vernetzbar ist, und eine Füllstoffkomponente F, welche wenigstens einen organischen Füllstoff enthält, welcher einen ¹⁴C-Gehalt in einem Bereich von 0,20 bis 0,45 Bq/g Kohlenstoff und einen d99-Wert von <25,0 µm aufweist, ein Kit-of-parts umfassend als Teil (A) eine Kautschukzusammensetzung enthaltend vorgenannte Komponenten K und F und als Teil (B) das Vulkanisations-System VS umfassend wenigstens das wenigstens eine Peroxid, jeweils daraus erhältliche vulkanisierte Kautschukzusammensetzungen, eine Verwendung eines der vorgenannten Produkte zum Einsatz bei der Herstellung von technischen Gummiartikeln, vorzugsweise mit Dichtfunktion, entsprechende technische Gummiartikel als solche, vorzugsweise mit Dichtfunktion, sowie eine Verwendung des organischen Füllstoffs zur Erhöhung der Bruchdehnung und gleichzeitiger Erniedrigung des Druckverformungsrestes in vulkanisierten Kautschukzusammensetzungen.

### Stand der Technik / Hintergrund der Erfindung

Der Einsatz von Verstärkerfüllstoffen in Kautschukzusammensetzungen ist im Stand der Technik bekannt. Hier sind insbesondere Industrieruße wie Furnace-Ruße zu nennen, die hierzu eingesetzt werden. Industrieruße stellen nach wie vor die größte Menge an Verstärkerfüllstoffen dar. Industrieruße werden auf Basis von hocharomatischen petrochemischen Ölen mittels unvollständiger Verbrennung oder durch Pyrolyse von Kohlenwasserstoffen hergestellt. Unter Umweltgesichtspunkten ist es jedoch wünschenswert, die Verwendung fossiler Energieträger zur Herstellung von Füllstoffen zu vermeiden, beziehungsweise auf ein Minimum zu reduzieren. Besonders gravierend ist hier zu nennen, dass zur Herstellung einer Tonne Industrieruß etwa 1 Tonne CO₂ im Produktionsprozess, je nach spezifischer Oberfläche des Rußes, freigesetzt wird. Zudem können Industrieruße oftmals für bestimmte Anwendungen auch aus Gründen der Farbgebung nicht eingesetzt werden.

Für Kautschukzusammensetzungen enthaltende Verstärkerfüllstoffe existiert eine Vielzahl unterschiedlicher Einsatzgebiete. So können diese beispielsweise in der Reifenindustrie eingesetzt werden, aber auch im Bereich der technischen Gummiartikel, hier zum Beispiel, um entsprechende Artikel mit guter Dichtfunktion bereitzustellen wie elastomere Dichtungen. Elastomere Dichtungen müssen hierbei die von ihnen hervorzurufende Dichtfunktion meistens über einen langen Zeitraum bei unterschiedlichen und auch wechselnden Einsatzbedingungen gewährleisten, beispielsweise bei hohen Temperaturen und/oder hohen Drücken.

Die wichtigste Vernetzungsmethode in der Kautschukindustrie ist die Schwefelvulkanisation. Mittels Schwefel vernetzte Elastomere weisen jedoch oftmals keine ausreichende Wärmebeständigkeit und einen zu hohen Verformungsrest auf, weshalb diese Vernetzungsmethode im Bereich der Vulkanisation von Kautschukzusammensetzungen zur Herstellung der vorgenannten technischen Gummiartikel mit anvisierter guter Dichtfunktion wie zur Herstellung von elastomeren Dichtungen oftmals nachteilig und daher nicht die Vernetzungsmethode der Wahl ist. Die Peroxid-Vernetzung ist nach der Schwefelvulkanisation die zweitwichtigste Vernetzungsmethode von Kautschuken. Vor allem bei Kautschuken, die keine Doppelbindungen in der Hauptkette besitzen, wie zum Beispiel EPDM, ist die Peroxid Vernetzung von großer technischer Bedeutung. Peroxid vernetzte Elastomere weisen im Vergleich zu schwefelvernetzten Elastomeren üblicherweise eine bessere Wärmebeständigkeit (stabile C-C-Bindung) und einen niedrigen Verformungsrest auf.

Um Vorhersagen über die Belastungsfähigkeit von Kautschukzusammensetzungen zu erhalten, die zur Herstellung von z.B. Dichtungen eingesetzt werden, wird oftmals der sogenannte Druckverformungsrest (DVR) unter den Einsatzbedingungen oder verschärften Bedingungen wie beispielsweise höheren Temperaturen, gemessen. Der Druckverformungsrest gibt den Verformungsanteil eines Probenkörpers an, der nach Aufheben der Belastung zurückbleibt. Die Prüfung des Druckverformungsrestes wird zur Beurteilung des viskoelastischen Verhaltens von Elastomeren unter länger andauernder statischer Druckverformung herangezogen. Als vergleichende Prüfmethode dient sie zur Beurteilung von Elastomeren für den Einsatz als Dichtungselemente, Dämpfungsglieder für den Maschinenbau und vieles mehr. Mittels des Druckverformungsrestes kann somit ermittelt werden, welche prozentuale Verformung bei lang andauernder, konstanter Druckbelastung und anschließender Entspannung bei Elastomeren in Bezug auf die Anfangsverformung, zurückbleibt. Er ist ein wichtiger Faktor, der die mechanische Alterung von Elastomeren in Bezug auf ihre Rückstellung nach einer Verformung wie Druck und/oder Stress beschreibt. Diese Alterung beeinflusst auch die chemischen Alterungsprozesse, wie zum Beispiel die thermisch-oxidative Alterung. Um Vorhersagen über die Belastungsfähigkeit von Kautschukzusammensetzungen zu erhalten, die zur Herstellung von z.B. Dichtungen eingesetzt werden, wird neben dem Druckverformungsrest weiterhin das Zug-Dehnungsverhalten geprüft, zum Beispiel unter Raumtemperatur und nach Heißluftalterung. Üblicherweise werden sowohl eine hohe Bruchdehnung bei Raumtemperatur als auch niedrige Druckverformungsreste angestrebt. Beide Eigenschaften sind in der Regel im Fall der vorgenannten Peroxid-Vernetzung von der Vernetzungsdichte der Peroxid-Vernetzung abhängig und werden oftmals über die Dosierung der Peroxide und gegebenenfalls bestimmter ebenfalls eingesetzter Co-Agenzien gesteuert. Je höher die Vernetzungsdichte, desto niedriger ist üblicherweise jedoch sowohl die Bruchdehnung als auch der Druckverformungsrest, wobei eine geringe Bruchdehnung wie vorstehend erwähnt nachteilig ist, insbesondere wie vorstehend erwähnt in Bezug auf Alterung, aber auch in Hinblick auf die Risseigenschaften. Diese beiden Eigenschaften - Bruchdehnung und Vernetzungsdichte - lassen sich in der Regel bei Verwendung von üblichen Verstärkungsfüllstoffen wie Industrieruß und anorganischen Füllstoffen wie Kieselsäuren nicht unabhängig voneinander optimieren.

Es besteht daher ein Bedarf an neuen, mittels Peroxid vernetzbaren Kautschukzusammensetzungen, die die vorstehend genannten Nachteile nicht aufweisen.

### Aufgabe

Eine Aufgabe der vorliegenden Erfindung ist es daher, mittels Peroxid vulkanisierbare Kautschukzusammensetzungen bereitzustellen, die sich dazu eignen, technische Gummiwaren und/oder Komponenten dieser Waren, insbesondere mit exzellenter Dichtfunktion, bereitstellen zu können, wobei die hieraus erhältlichen mittels Peroxid vulkanisierten Kautschukzusammensetzungen nicht nur eine hohe Wärmebeständigkeit aufweisen müssen, sondern sich gleichzeitig sowohl durch eine hohe Bruchdehnung als auch niedrige Druckverformungsreste auszeichnen sollen. Insbesondere sollen die neuen mittels Peroxid vulkanisierbaren Kautschukzusammensetzungen eine optimale Einstellung und Balance dieser beiden Parameter erlauben und dadurch u.a. Vorteile in Bezug auf Alterung und Risseigenschaften aufweisen.

### Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist eine vulkanisierbare Kautschukzusammensetzung umfassend eine Kautschukkomponente K, eine Füllstoffkomponente F und ein Vulkanisations-System VS, wobei
das Vulkanisations-System VS wenigstens ein Peroxid umfasst,
die Kautschukkomponente K wenigstens einen Kautschuk enthält, welcher mittels des wenigstens einen Peroxids des Vulkanisations-Systems VS vernetzbar ist, und
die Füllstoffkomponente F wenigstens einen organischen Füllstoff enthält, welcher einen ¹⁴C-Gehalt in einem Bereich von 0,20 bis 0,45 Bq/g Kohlenstoff und einen d99-Wert von <25,0 µm aufweist.

Ein weiterer Gegenstand der vorliegenden Erfindung ist ein Kit-of-parts umfassend in räumlich getrennter Form
als Teil (A) eine Kautschukzusammensetzung, die wenigstens die erfindungsgemäß eingesetzte Kautschukkomponente K und wenigstens die erfindungsgemäß eingesetzte Füllstoffkomponente F umfasst, wobei Teil (A) des Kit-of-parts jedoch nicht das wenigstens eine Peroxid des erfindungsgemäß eingesetzten Vulkanisations-Systems VS umfasst, und
als Teil (B) ein erfindungsgemäß eingesetztes Vulkanisations-System VS umfassend wenigstens ein Peroxid.

Ein weiterer Gegenstand der vorliegenden Erfindung ist eine vulkanisierte Kautschukzusammensetzung, welche erhältlich ist durch Vulkanisation der erfindungsgemäßen vulkanisierbaren Kautschukzusammensetzung oder durch Vulkanisation einer durch Zusammengeben und Vermischen der beiden Teile (A) und (B) des erfindungsgemäßen Kit-of-parts erhältlichen vulkanisierbaren Kautschukzusammensetzung.

Ein weiterer Gegenstand der vorliegenden Erfindung ist eine Verwendung der erfindungsgemäßen vulkanisierbaren Kautschukzusammensetzung, des erfindungsgemäßen Kit-of-parts oder der erfindungsgemäßen vulkanisierten Kautschukzusammensetzung zum Einsatz bei der Herstellung von technischen Gummiartikeln, vorzugsweise bei der Herstellung von technischen Gummiartikeln mit Dichtfunktion, insbesondere von Dichtungen, Profilen, Dämpfern, Ringen und Schläuchen.

Ein weiterer Gegenstand der vorliegenden Erfindung ist ein technischer Gummiartikel, vorzugsweise mit Dichtfunktion, hergestellt unter Einsatz der erfindungsgemäßen vulkanisierbaren Kautschukzusammensetzung, des erfindungsgemäßen Kit-of-parts, oder der erfindungsgemäßen vulkanisierten Kautschukzusammensetzung, insbesondere eine Dichtung, ein Profil, ein Dämpfer, Ring oder Schlauch.

Ein weiterer Gegenstand der vorliegenden Erfindung ist eine Verwendung des erfindungsgemäß eingesetzten organischen Füllstoffs zur Erhöhung der Bruchdehnung und gleichzeitiger Erniedrigung des Druckverformungsrestes in vulkanisierten Kautschukzusammensetzungen, die erhältlich sind durch Vulkanisation mittels wenigstens eines Peroxids, wobei die hierzu eingesetzten vulkanisierbaren Kautschukzusammensetzungen neben dem wenigstens einen Peroxid und dem organischen Füllstoff zudem wenigstens einen Kautschuk enthalten, welcher mittels des wenigstens einen Peroxids vernetzbar ist.

Es wurde gefunden, dass der erfindungsgemäß eingesetzte organische Füllstoff eine umweltfreundliche Alternative sowohl zu bekannten insbesondere anorganischen Füllstoffen als auch zu Rußen für Kautschukanwendungen darstellt, die mittels Peroxid vernetzt werden. Es wurde ferner gefunden, dass der erfindungsgemäß eingesetzte organische Füllstoff direkt als solcher zur Einarbeitung in Kautschukzusammensetzungen geeignet ist, insbesondere um technische Gummiartikel, vorzugsweise mit Dichtfunktion. wie Profile, Dichtungen, Dämpfer, Ringe und/oder Schläuche herzustellen.

Es wurde zudem gefunden, dass sich die erfindungsgemäßen Kautschukzusammensetzungen nach einer Vulkanisierung mit Peroxid sowohl durch eine hohe Bruchdehnung als auch durch einen nur geringen Druckverformungsrest auszeichnen. Ferner hat sich gezeigt, dass eine optimale Balance dieser beiden einzustellenden Parameter mittels der erfindungsgemäßen vulkanisierbaren Kautschukzusammensetzung erzielt werden kann. Es wurde in diesem Zusammenhang gefunden, dass diese vorteilhaften Effekte auf den Einsatz des erfindungsgemäß eingesetzten organischen Füllstoffs in der Kautschukzusammensetzung zurückzuführen sind. Dabei hat sich insbesondere überraschenderweise herausgestellt, dass der erfindungsgemäß eingesetzte organische Füllstoff in dem für die Vulkanisation mittels Peroxid gegebenem Temperatur- und Zeitfenster chemisch in die Polymervernetzung eingebunden wird. Mit dieser Anbindung des Verstärkerfüllstoffs, insbesondere durch Ausnutzung der spezifischen Oberflächenchemie des erfindungsgemäß eingesetzten organischen Füllstoffs, werden Teile der Polymerketten des Kautschuks in ihrer Beweglichkeit eingeschränkt, was bei dynamischen Deformationen zu einer Erhöhung des Speichermoduls führt und das Verlustmodul erniedrigt. Diese vorteilhafte Besonderheit des erfindungsgemäß eingesetzten organischen Füllstoffs erlaubt es daher, die Polymer-Polymer Vernetzung zu reduzieren und trotzdem einen niedrigen Druckverformungsrest und eine hohe Bruchdehnung zu erzielen.

Es wurde gefunden, dass die erfindungsgemäßen Kautschukzusammensetzungen nach einer Vulkanisierung nicht nur eine hohe thermische Beständigkeit aufweisen, sondern auch verbesserte, nämlich verringerte, Druckverformungsreste, was gerade dann sehr relevant ist, wenn die resultierenden Produkte im Bereich der technischen Gummiwaren wie in Dichtungen, Dämpfern, Schläuchen und Ringen wie O-Ringen eingesetzt werden. Es wurde hierbei insbesondere überraschend gefunden, dass ein zumindest partieller Austausch von Industrieruß durch den erfindungsgemäß eingesetzten organischen Füllstoff in mittels Peroxid vernetzten Kautschukmischungen zu einer Verbesserung, nämlich Verringerung, des Druckverformungsrestes führt, wobei dies insbesondere bereits bei einer im Vergleich zu Industrieruß-haltigen mittels Peroxid vernetzten Kautschukmischungen deutlich niedrigeren Vernetzungsdichte erfolgt. Dies ermöglicht insbesondere die Einstellung sowohl einer hohen Bruchdehnung, so dass das Operationsfeld für eine gezielte Einstellung von gummitechnischen Eigenschaften verbreitert werden kann.

Es wurde ferner überraschend gefunden, dass die erfindungsgemäßen Kautschukzusammensetzungen insbesondere nach einer Vulkanisierung in Elastomer-Bauteilen mit Dichtfunktion und Elastomer-Bauteilen mit dynamischen Eigenschaften bzw. geringem Satzverhalten eingesetzt werden können.

### Ausführliche Beschreibung

Der Begriff "umfassend" im Sinne der vorliegenden Erfindung im Zusammenhang, z.B. mit den erfindungsgemäßen vulkanisierbaren Kautschukzusammensetzungen und den Verfahrensschritten oder Stufen im Rahmen von hierin beschriebenen Verfahren hat vorzugsweise die Bedeutung "bestehend aus". Dabei können beispielsweise hinsichtlich der erfindungsgemäßen vulkanisierbaren Kautschukzusammensetzungen - neben den darin zwingend vorhandenen Bestandteilen - zudem eine oder mehrere der weiteren nachstehend genannten optional enthaltenen Bestandteile in diesen enthalten sein. Alle Bestandteile können dabei jeweils in ihren nachstehend genannten bevorzugten Ausführungsformen vorliegen. Hinsichtlich der erfindungsgemäßen und hierin beschriebenen Verfahren können diese dabei neben den zwingend vorhandenen Schritten und/oder Stufen weitere optionale Verfahrensschritte und Stufen aufweisen.

Die Mengen aller in den hierin beschriebenen Zusammensetzungen wie den erfindungsgemäßen vulkanisierbaren Kautschukzusammensetzungen enthaltenen Bestandteile (umfassend jeweils alle zwingenden und zudem alle optionalen Bestandteile) addieren sich insgesamt jeweils auf 100 Gew.-%.

### Vulkanisierbare Kautschukzusammensetzung

Die erfindungsgemäße vulkanisierbare Kautschukzusammensetzung umfasst eine Kautschukkomponente K, eine Füllstoffkomponente F und ein Vulkanisations-System VS.

Vorzugsweise umfasst das Vulkanisations-System VS keinen freien Schwefel und insbesondere umfasst die erfindungsgemäße vulkanisierbare Kautschukzusammensetzung als solche keinen freien Schwefel. Mit anderen Worten ist die erfindungsgemäße vulkanisierbare Kautschukzusammensetzung vorzugsweise nicht durch eine Schwefelvulkanisation, die gegebenenfalls vor, nach oder simultan zu der Peroxid-Vernetzung ablaufen könnte, vulkanisierbar. Vorzugsweise wird die erfindungsgemäße vulkanisierbare Kautschukzusammensetzung somit ausschließlich mittels Peroxid vernetzt.

### Füllstoffkomponente F

Das Füllstoffkomponente F der erfindungsgemäßen vulkanisierbaren Kautschukzusammensetzung umfasst wenigstens einen organischen Füllstoff.

Da der erfindungsgemäß eingesetzte Füllstoff organisch ist, fallen anorganische Füllstoffe wie Fällungskieselsäuren nicht unter diesen Begriff.

Dem Fachmann ist der Begriff des Füllstoffs und insbesondere des organischen Füllstoffs bekannt. Vorzugsweise ist der erfindungsgemäße organische Füllstoff ein Verstärkerfüllstoff, d.h. ein aktiver Füllstoff. Verstärkende bzw. aktive Füllstoffe können durch eine Wechselwirkung mit einem Kautschuk innerhalb einer Kautschukzusammensetzung im Gegensatz zu inaktiven (nicht-verstärkenden) Füllstoffen die viskoelastischen Eigenschaften des Kautschuks verändern.

Beispielsweise können sie die Viskosität der Kautschuke beeinflussen und können das Bruchverhalten der Vulkanisate verbessern, beispielsweise im Hinblick auf Weiterreißfestigkeit, Weiterreißwiderstand und Abrieb. Inaktive Füllstoffe verdünnen dagegen die Kautschukmatrix.

Der erfindungsgemäß eingesetzte organische Füllstoff weist einen ¹⁴C-Gehalt in einem Bereich von 0,20 bis 0,45 Bq/g Kohlenstoff, vorzugsweise von 0,23 bis 0,42 Bq/g Kohlenstoff, auf. Der oben angegebene erforderliche ¹⁴C-Gehalt wird von organischen Füllstoffen erfüllt, die aus Biomasse durch weitere Behandlung respektive Umsetzung, vorzugsweise Fraktionierung, derselben erhalten werden, wobei die Fraktionierung thermisch, chemisch und/oder biologisch erfolgen kann, vorzugsweise thermisch und chemisch erfolgt. Aus fossilen Materialien wie insbesondere fossilen Brennstoffen erhaltene Füllstoffe fallen somit nicht unter die Definition des erfindungsgemäß einzusetzenden Füllstoffs gemäß der vorliegenden Erfindung, da diese keinen entsprechenden ¹⁴C-Gehalt besitzen.

Als Biomasse wird hierin prinzipiell jegliche Biomasse bezeichnet, wobei der Begriff "Biomasse" hierin sogenannte Phytomasse, das heißt aus Pflanzen stammende Biomasse, Zoomasse, das heißt aus Tieren stammende Biomasse sowie mikrobielle Biomasse, das heißt aus Mikroorganismen einschließlich Pilzen stammende Biomasse umfasst, es sich bei der Biomasse um Trockenbiomasse oder Frischbiomasse handelt, und diese aus toten oder lebenden Organismen stammt. Die hierin zur Herstellung der Füllstoffe besonders bevorzugte Biomasse, ist Phytomasse, vorzugsweise tote Phytomasse. Tote Phytomasse umfasst unter anderem abgestorbene, abgestoßene oder abgetrennte Pflanzen und Bestandteile. Dazu zählen beispielsweise abgebrochene und abgerissene Blätter, Getreidehalme, Seitensprosse, Zweige und Äste, das gefallene Laub, gefällte oder beschnittene Bäume, sowie Samen und Früchte und daraus gewonnene Bestandteile, aber auch Sägemehl, Sägespäne und andere aus der Holzverarbeitung stammende Produkte.

Vorzugsweise weist der organische Füllstoff einen Kohlenstoffgehalt in einem Bereich von >60 Gew.-% bis <90 Gew.-%, besonders bevorzugt von >60 Gew.-% bis <85 Gew.-%, ganz besonders bevorzugt von >60 Gew.-% bis <82 Gew.-%, noch bevorzugter von >60 Gew.-% bis <80 Gew.-%, auf, jeweils bezogen auf den aschefreien und wasserfreien Füllstoff. Eine Methode zur Bestimmung des Kohlenstoffgehalts ist nachstehend im Methodenteil aufgeführt. Dadurch unterscheidet sich der organische Füllstoff sowohl von Rußen wie Industrierußen, die aus fossilen Rohstoffen hergestellt werden, als auch von Rußen, die aus nachwachsenden Rohstoffen hergestellt werden, da Ruße einen entsprechenden Kohlenstoffgehalt von mindestens 95 Gew.-% aufweisen.

Vorzugsweise weist der organische Füllstoff einen Sauerstoffgehalt in einem Bereich von >8 Gew.-% bis <30 Gew.-%, besonders bevorzugt von >10 Gew.-% bis <30 Gew.-%, ganz besonders bevorzugt von >15 Gew.-% bis <30 Gew.-%, ganz besonders bevorzugt von >20 Gew.-% bis <30 Gew.-%, auf, jeweils bezogen auf den aschefreien und wasserfreien Füllstoff. Der Sauerstoffgehalt lässt sich durch Hochtemperaturpyrolyse ermitteln, beispielsweise mit Hilfe des EuroEA3000 CHNS-O Analyzers der Firma EuroVector S.p.A.

Vorzugsweise weist der organische Füllstoff eine BET-Oberfläche (spezifische Gesamtoberfläche nach Brunauer, Emmett und Teller) in einem Bereich von 10 bis 150 m²/g, besonders bevorzugt in einem Bereich von 20 bis 120 m²/g, noch bevorzugter in einem Bereich von 30 bis 110 m²/g, insbesondere in einem Bereich von 40 bis 100 m²/g, am meisten bevorzugt in einem Bereich von 40 bis <100 m²/g auf.

Vorzugsweise weist der organische Füllstoff eine STSA-Oberfläche in einem Bereich von 10 bis <200 m²/g auf. Eine Methode zur Bestimmung der STSA-Oberfläche (Statistical Thickness Surface Area) ist nachstehend im Methodenteil aufgeführt. Vorzugsweise weist der erfindungsgemäße organische Füllstoff eine STSA-Oberfläche in einem Bereich von 10 bis 150 m²/g, besonders in einem Bereich von 20 bis 120 m²/g, ganz besonders bevorzugt in einem Bereich von 30 bis 110 m²/g auf, insbesondere eine in einem Bereich von 40 bis 100 m²/g, am meisten bevorzugt in einem Bereich von 40 bis <100 m²/g auf.

Vorzugsweise weist der organische Füllstoff wenigstens eine funktionelle Gruppe auf, die ausgewählt ist aus phenolischen OH-Gruppen, Phenolat-Gruppen, aliphatischen OH-Gruppen, Carbonsäure-Gruppen, Carboxylat-Gruppen und Mischungen davon.

Vorzugsweise ist der erfindungsgemäß eingesetzte organische Füllstoff ein ligninbasierter organischer Füllstoff, der aus Biomasse und/oder Biomassekomponenten hergestellt wird. Beispielsweise kann das Lignin für die Herstellung des ligninbasierten organischen Füllstoffs aus Biomasse isoliert, extrahiert und/oder gelöst werden. Geeignete Verfahren zur Gewinnung des Lignins für die Herstellung des ligninbasierten organischen Füllstoffs aus Biomasse sind beispielsweise Hydrolyseverfahren oder Aufschlussverfahren wie das Kraft-Aufschlussverfahren. Der Ausdruck "auf Lignin basierend" bedeutet im Sinne der vorliegenden Erfindung vorzugsweise, dass in dem erfindungsgemäß eingesetzten organischen Füllstoff ein oder mehrere Lignin-Einheiten und/oder ein oder mehrere Lignin-Gerüste vorhanden sind. Lignine sind feste Biopolymere, die in pflanzliche Zellwände eingelagert werden und so eine Verholzung (Lignifizierung) von Pflanzenzellen bewirken. Sie sind daher in Biomasse und insbesondere in biologisch nachwachsenden Rohstoffen enthalten und stellen daher - insbesondere in hydrothermal behandelter Form - eine umweltfreundliche Füllstoff-Alternative dar.

Vorzugsweise liegt das Lignin und vorzugsweise der erfindungsgemäß eingesetzte organische Füllstoff als solcher, sofern es sich um einen ligninbasierten Füllstoff handelt, zumindest teilweise in hydrothermal behandelter Form vor und ist jeweils besonders bevorzugt mittels hydrothermaler Behandlung erhältlich. Besonders bevorzugt basiert der erfindungsgemäß eingesetzte organische Füllstoff auf mittels hydrothermaler Behandlung erhältlichem Lignin. Geeignete Verfahren der hydrothermalen Behandlung insbesondere von Ligninen und Lignin-haltigen organischen Füllstoffen sind zum Beispiel in WO 2017/085278 A1 und WO 2017/194346 A1 sowie in EP 3 470 457 A1 beschrieben. Vorzugsweise wird die hydrothermale Behandlung bei Temperaturen >100°C bis <300°C, besonders bevorzugt von >150°C bis <250°C, in Gegenwart von flüssigem Wasser durchgeführt. Vorzugsweise ist der organische Füllstoff ein ligninbasierter Füllstoff, wobei vorzugsweise zumindest das Lignin und noch bevorzugter der organische Füllstoff als solcher zumindest teilweise in einer mittels hydrothermalen Behandlung erhältlichen Form vorliegt, besonders bevorzugt mittels hydrothermaler Behandlung erhältlich ist, wobei die hydrothermale Behandlung vorzugsweise bei einer Temperatur in einem Bereich von >100°C bis <300°C, besonders bevorzugt von >150°C bis <250°C, durchgeführt worden ist. Optional kann noch vor Durchführung der hydrothermalen Behandlung eine Umsetzung des hierzu eingesetzten Edukts wie eines ligninhaltigen Rohstoffs, insbesondere eines Lignins, mit wenigstens einem Vernetzer erfolgen. Der Vernetzer weist vorzugsweise mindestens eine funktionelle Gruppe auf, die mit den vernetzbaren Gruppen des Lignins reagieren kann. Der Vernetzer weist bevorzugt mindestens eine funktionelle Gruppe ausgewählt aus Aldehyd-, Carbonsäureanhydrid, Epoxid-, Hydroxyl- und Isocyanatgruppen oder einer Kombination davon auf. Vorzugsweise ist der Vernetzer ausgewählt aus Aldehyden, Epoxiden, Säureanhydriden, Polyisocyanaten und/oder Polyolen, insbesondere aus Aldehyden wie Formaldehyd, Furfural und/oder Zuckeraldehyden. Der Vernetzer kann dabei mit freien ortho- und para-Positionen der phenolischen Ringe, mit aromatischen und aliphatischen OH-Gruppen, und/oder mit Carboxyl-Gruppen des Lignins reagieren.

Vorzugsweise weist der organische Füllstoff einen pH-Wert in einem Bereich von 7 bis 9, besonders bevorzugt in einem Bereich von >7 bis <9, ganz besonders bevorzugt in einem Bereich von >7,5 bis <8,5 auf.

Der erfindungsgemäß eingesetzte organische Füllstoff weist einen d99-Wert von <25,0 µm auf. Die Methode zur Bestimmung des d99-Werts ist nachstehend im Methodenteil beschrieben und erfolgt mittels Laserbeugung nach ISO 13320:2009. Die nachstehend genannten d90- und d25-Werte werden gleichermaßen so bestimmt. Dem Fachmann ist dabei klar, dass der erfindungsgemäß eingesetzte organische Füllstoff in Form von Teilchen vorliegt und die mittlere Teilchengröße (mittlere Korngröße) dieser Teilchen durch den vorgenannten d99-Wert und die ebenfalls genannten d90- und d25-Werte beschrieben wird/werden.

Vorzugsweise weist der organische Füllstoff einen d99-Wert von <20,0 µm, noch bevorzugter von <15,0 µm, besonders bevorzugt von <10 µm, ganz besonders bevorzugt von <9,0 µm, noch bevorzugter von <8,0 µm, noch bevorzugter von <7,0 µm, am meisten bevorzugt von <6,0 µm, auf, vorzugsweise jeweils bestimmt mittels Laserbeugung nach ISO 13320:2009.

Vorzugsweise weist der organische Füllstoff einen d90-Wert von <7,0 µm, besonders bevorzugt von <6,0 µm, ganz besonders bevorzugt von <5,0 µm, auf, und/oder weist vorzugsweise einen d25-Wert von <3,0 µm, besonders bevorzugt von <2,0 µm, ganz besonders bevorzugt von <1,0 µm, auf, vorzugsweise jeweils bestimmt mittels Laserbeugung nach ISO 13320:2009.

Vorzugsweise enthält die Kautschukzusammensetzung den wenigstens einen organischen Füllstoff in einer Menge, die in einem Bereich von 10 bis 150, besonders bevorzugt von 15 bis 130, ganz besonders bevorzugt von 20 bis 120, noch bevorzugter von 30 bis 100 phr, am meisten bevorzugt von 40 bis 80 phr, liegt.

Die hierin verwendete Angabe phr (parts per hundred parts of rubber by weight) ist die in der Kautschukindustrie übliche Mengenangabe für Mischungsrezepturen. Die Dosierung der Gewichtsteile der einzelnen Bestandteile wird dabei stets auf 100 Gewichtsteile der gesamten Masse aller in der Mischung vorhandenen Kautschuke bezogen.

Neben dem wenigstens einen erfindungsgemäß eingesetzten organischen Füllstoff kann die Füllstoffkomponente F einen oder mehrere weitere, von dem erfindungsgemäß eingesetzten organischen Füllstoff verschiedene Füllstoff(e) enthalten. Vorzugsweise ist der Anteil in phr des wenigstens einen erfindungsgemäß eingesetzten organischen Füllstoff in der Kautschukzusammensetzung höher als der entsprechende Anteil des oder der einen oder mehreren weiteren Füllstoffs/Füllstoffe.

Für den Fall, dass der erfindungsgemäße organische Füllstoff nur als Teilersatz üblicher Industrieruße dient, können die erfindungsgemäßen Kautschukzusammensetzungen auch Industrieruße, insbesondere Furnace-Ruße enthalten wie sie beispielsweise unter dem ASTM-Code N550 als Allzweckruße eingestuft sind. Dies gilt insbesondere für solche unter den ASTM-Code N550 subsumierbare Industrieruße, die eine STSA-Oberfläche in einem Bereich von 8 bis 150 m²/g aufweisen. Alternativ oder zusätzlich können die erfindungsgemäßen Kautschukzusammensetzungen auch Ruße enthalten, die nicht unter vorgenannten ASTM-Code subsumiert werden, insbesondere solche mit einer STSA-Oberfläche in einem Bereich von 20 bis 60 m²/g.

Zusätzlich oder alternativ können die erfindungsgemäßen Kautschukzusammensetzungen insbesondere anorganische Füllstoffe enthalten, beispielsweise unterschiedlicher Teilchengröße, Teilchenoberfläche und chemischer Natur mit unterschiedlichem Potenzial, das Vulkanisationsverhalten zu beeinflussen. Für den Fall, dass weitere Füllstoffe enthalten sind, sollten diese vorzugsweise möglichst ähnliche Eigenschaften besitzen wie die in der erfindungsgemäßen Kautschukzusammensetzung eingesetzten erfindungsgemäßen organischen Füllstoffe, insbesondere in Bezug auf deren pH-Wert.

Werden weitere Füllstoffe eingesetzt, so handelt es sich hierbei vorzugsweise um Schichtsilikate wie Tonminerale, beispielsweise Talk; Carbonate wie Calciumcarbonat; Silikate wie beispielsweise Calcium-, Magnesium- und Aluminiumsilikat; und Oxide wie beispielsweise Magnesiumoxid und Silica bzw. Kieselsäure.

Insbesondere für den Fall, dass der erfindungsgemäß eingesetzte organische Füllstoff nur als Teilersatz üblicher Kieselsäuren bzw. von Silica dient, können die erfindungsgemäßen Kautschukzusammensetzungen auch solche anorganischen Füllstoffe wie Silica bzw. Kieselsäure enthalten.

Im Rahmen der vorliegenden Erfindung zählt Zinkoxid jedoch nicht zu den anorganischen Füllstoffen, da Zinkoxid die Aufgabe eines vulkanisationsförderndes Additivs zukommt. Zusätzliche Füllstoffe sind jedoch mit Bedacht zu wählen, da beispielsweise Silica dazu tendiert organische Moleküle an seine Oberfläche zu binden und damit deren Wirkung zu inhibieren.

Anorganische Füllstoffe, hierunter vorzugsweise Silica und andere Füllstoffe, die Si-OH-Gruppen an ihrer Oberfläche tragen, können oberflächenbehandelt (oberflächenmodifiziert) sein. Insbesondere eine Silanisierung mit Organosilanen wie beispielsweise Alkylalkoxysilanen oder Aminoalkylalkoxysilanen oder Mercaptoalkylalkoxysilanen kann vorteilhaft sein. Die Alkoxysilangruppen können beispielsweise durch hydrolytische Kondensation an die Oberflächen von Silicaten oder Silica binden oder an andere geeignete Gruppen.

Die von den erfindungsgemäßen organischen Füllstoffen verschiedenen Füllstoffe können einzeln oder in Kombination miteinander eingesetzt werden. Im Falle, dass weitere Füllstoffe eingesetzt werden, so beträgt deren Anteil vorzugsweise weniger als 40 phr, besonders bevorzugt 20 bis 40 phr und besonders bevorzugt 25 bis 35 phr.

### Kautschukkomponente K

Das Kautschukkomponente K der erfindungsgemäßen vulkanisierbaren Kautschukzusammensetzung umfasst wenigstens einen Kautschuk, welcher mittels des wenigstens eines Peroxids des Vulkanisations-Systems VS vernetzbar ist.

Für die Herstellung der erfindungsgemäßen Kautschukzusammensetzungen eignet sich jede Art von Kautschuk, sofern dieser mittels wenigstens eines Peroxids vernetzbar ist. Geeignete Kautschuke, sowohl Naturkautschuke (NR) als auch Synthesekautschuke sind dem Fachmann bekannt. Kautschuke, die nicht mittels Peroxiden vernetzt werden können, sind beispielsweise chlorierte Isobuten-Isopren-Kautschuke (CIIR; chloro-isobutene-isoprene rubber), Isobuten-Isopren-Kautschuke (IIR), Epichlorhydrin-Kautschuke (ECO/CO/ETER) und Propylenoxid-Kautschuke (GPO).

Vorzugsweise ist der wenigstens eine Kautschuk der Kautschukkomponente K ausgewählt aus der Gruppe bestehend aus Kautschuken ohne Kohlenstoff-Kohlenstoff-Doppelbindungen in ihrer Hauptkette, vorzugsweise ohne Kohlenstoff-Kohlenstoff-Doppelbindungen innerhalb ihrer gesamten Struktur, besonders bevorzugt ausgewählt aus der Gruppe bestehend aus HNBR (hydrierten Acrylnitril-Butadien-Kautschuken), Ethylen-Propylen-Dien-Kautschuken (EPDM), Ethylen-Propylen-Kautschuken (EPM), Acrylat-Ethylen-Kautschuken (AEM), Ethylen-Vinylacetat-Kautschuken (EVM), Chlorkautschuken, insbesondere chlorierten Polyethylenen (CM), Silikon-Kautschuken (Q), chlorsulfonierten Polyethylenen (CSM), Fluorkautschuk-Elastomeren (FPM) und Mischungen davon.

### Vulkanisations-System VS

Das Vulkanisations-System VS der erfindungsgemäßen vulkanisierbaren Kautschukzusammensetzung umfasst wenigstens ein Peroxid. Peroxid fungiert als Vulkanisator.

Durch die Gegenwart des Vulkanisations-Systems VS und des darin enthaltenen Peroxids können die erfindungsgemäßen vulkanisierbaren Kautschukzusammensetzungen vulkanisiert werden.

Initiiert wird die Vulkanisationsreaktion durch den thermischen Zerfall des Peroxids, der zur Bildung von zwei Radikalen führt. Die Radikalübertragung an den Kautschuk erfolgt entweder durch Substitution eines Wasserstoffatoms oder durch Addition an eine Doppelbindung des Polymers, sofern eine vorhanden ist. Die Effizienz der Vernetzung kann durch Verwendung radikalübertragender Substanzen, den sogenannten Co-Agentien, wesentlich verbessert werden. Das Kautschukpolymerradikal kann je nach Struktur und vorhandenem Co-Agens in verschiedener Weise weiterreagieren.

Vorzugsweise umfasst das wenigstens eine Peroxid des Vulkanisations-Systems VS wenigstens ein organisches Peroxid, insbesondere stellt ein solches dar, besonders bevorzugt ein organisches Peroxid ausgewählt aus der Gruppe bestehend aus Dialkyl-Peroxiden, Alkyl-Aryl-Peroxiden, Diaryl-Peroxiden, Alkyl-Persäureester, Aryl-Persäureester, Diacyl-peroxiden, polyvalenten Peroxide und Mischungen davon, ganz besonders bevorzugt ein organisches Peroxid ausgewählt aus der Gruppe bestehend aus Di-tert.-butylperoxid, 2,5-Dimethyl-2,5-di(tert.-butyl-peroxy)hexan, Dicumylperoxid, tert.-Butylcumylperoxid, tert.-Butylperoxybenzoat, Dibenzoylperoxid, 1,1-Di(tert.-butylperoxy)-3,3,5-trimethylcyclohexan und Bis- (tert.-butylperoxy)-diisopropylbenzol sowie Mischungen davon.

Der Anteil an Peroxid in der erfindungsgemäßen Kautschukzusammensetzung beträgt vorzugsweise 0,5 bis 10 phr, besonders bevorzugt 1,0 bis 8 phr und besonders bevorzugt 1,5 bis 6 phr.

Vorzugsweise umfasst die Kautschukzusammensetzung, besonders bevorzugt das Vulkanisations-System VS der Kautschukzusammensetzung, wenigstens eine wenigstens einfach und vorzugsweise mehrfach ungesättigte organische Verbindung, welche vorzugsweise ausgewählt ist aus der Gruppe bestehend aus Di-(meth)acrylaten, Dimaleinimiden, Triallylverbindungen und ungesättigten Polymeren wie 1,2-Polybutadien und Trans-Polyoctenamer, jeweils vorzugsweise mit einem zahlenmittleren Molekulargewicht (Mn) von <10 000 g/mol, besonders bevorzugt von <5 000 g/mol, ganz besonders bevorzugt von <2 500 g/mol, noch bevorzugter von <1 500 g/mol, insbesondere von < 1 000 g/mol, am meisten bevorzugt von < 500 g/mol,, sowie Mischungen davon, besonders bevorzugt ausgewählt ist aus der Gruppe bestehend aus Ethylenglycoldi(meth)acrylat (EDMA), Trimethylolpropantri(meth)acrylat (TRIM), N,N'-m-Phenylenbismaleimid (MPBM), Diallylterephthalat (DATP), Triallylcyanurat (TAC), 1,4-Butandioldi(meth)acrylat und Mischungen davon. Die wenigstens eine wenigstens einfach und vorzugsweise mehrfach ungesättigte organische Verbindung fungiert dabei vorzugsweise als vorgenanntes Co-Agens, um die Vernetzungsausbeute zu steigern und damit bessere Werte für den Druckverformungsrest zu erzielen. Co-Agentien überbrücken sterische Effekte und unterdrücken vernetzungsinaktive Reaktionen.

Der Anteil an Co-Agens in der erfindungsgemäßen Kautschukzusammensetzung beträgt vorzugsweise 0,5 bis 10 phr, besonders bevorzugt 1,0 bis 8 phr und besonders bevorzugt 1,5 bis 6 phr.

Das Vulkanisations-System VS der erfindungsgemäßen vulkanisierbaren Kautschukzusammensetzung kann ein oder mehrere weitere von Peroxid unterschiedliche Vulkanisatoren und/oder vulkanisationsfördernde Additive enthalten wie Zinkoxid und/oder Fettsäuren wie Stearinsäure.

Das Vulkanisations-System VS der erfindungsgemäßen vulkanisierbaren Kautschukzusammensetzung kann ein oder mehrere Additive enthalten, welche die Vulkanisation fördern, jedoch nicht selbständig auszulösen vermögen. Zu solchen Additiven zählen beispielsweise Vulkanisationsbeschleuniger wie gesättigte Fettsäuren mit 12 bis 24, vorzugsweise 14 bis 20 und besonders bevorzugt 16 bis 18 Kohlenstoffatomen wie beispielsweise Stearinsäure und die Zinksalze vorgenannter Fettsäuren. Auch Thiazole können zu diesen Additiven gehören.

Werden vulkanisationsfördernde Additive und insbesondere vorgenannte Fettsäuren und/oder deren Zinksalze, vorzugsweise Stearinsäure und/oder Zinkstearat, in den erfindungsgemäßen Kautschukzusammensetzungen eingesetzt, so beträgt deren Anteil 0 bis 10 phr, besonders bevorzugt 1 bis 8 phr und besonders bevorzugt 2 bis 6 phr.

Das Vulkanisations-System VS der erfindungsgemäßen vulkanisierbaren Kautschukzusammensetzung kann zudem ein oder mehrere weitere von Peroxid verschiedene Vulkanisatoren enthalten, wie vorzugsweise Zinkoxid. Es ist insbesondere bevorzugt, solche Vulkanisatoren des Vulkanisations-Systems VS zusätzlich zu Peroxid einzusetzen.

Werden weitere Vulkanisatoren wie Zinkoxid in den erfindungsgemäßen Kautschukzusammensetzungen eingesetzt, so beträgt deren Anteil vorzugsweise 0 bis 10 phr, besonders bevorzugt 1 bis 8 phr und besonders bevorzugt 2 bis 6 phr.

Es ist zudem möglich neben wenigstens einem Peroxid freien Schwefel als weiteren Vulkanisator dem Vulkanisations-System VS zuzusetzen. Wie vorstehend erwähnt ist dies jedoch nicht bevorzugt.

Die Vulkanisation der Kautschukzusammensetzungen der vorliegenden Erfindung erfolgt vorzugsweise unter Verwendung von wenigstens einem Peroxid wie insbesondere wenigstens einem organischen Peroxid in Kombination mit Zinkoxid und/oder, vorzugsweise und, wenigstens einer Fettsäure.

### Weitere Bestandteile der vulkanisierbaren Kautschukzusammensetzung

Die erfindungsgemäße Kautschukzusammensetzung kann weitere optionale Bestandteile enthalten wie Weichmacher und/oder Antidegradationsmittel und/oder Harze, insbesondere die Haftfähigkeit erhöhende Harze.

Durch den Einsatz von Weichmachern lassen sich insbesondere Eigenschaften der nicht-vulkanisierten Kautschukzusammensetzung wie die Verarbeitbarkeit, aber auch Eigenschaften der vulkanisierten Kautschukzusammensetzung wie deren Flexibilität, insbesondere bei niedrigen Temperaturen beeinflussen. Besonders geeignete Weichmacher sind im Rahmen der vorliegenden Erfindung Mineralöle aus der Gruppe der paraffinischen Öle (im Wesentlichen gesättigte kettenförmige, Kohlenwasserstoffe) und naphthenische Öle (im Wesentlichen gesättigte ringförmige Kohlenwasserstoffe). Der Einsatz aromatischer Kohlenwasserstoff-Öle ist ebenso möglich und sogar bevorzugt. Vorteilhaft kann jedoch auch eine Mischung paraffinischer und/oder naphthenischer Öle mit aromatischen Ölen als Weichmacher in Bezug auf die Haftung der Kautschukzusammensetzung an andere kautschukenthaltende Komponenten in Reifen sein, wie beispielsweise die Karkasse. Weitere mögliche Weichmacher sind beispielsweise Ester aliphatischer Dicarbonsäuren wie beispielsweise der Adipinsäure oder Sebacinsäure, Paraffinwachse und Polyethylenwachse. Unter den Weichmachern sind im Rahmen der vorliegenden Erfindung besonders die paraffinischen Öle und naphthenischen Öle geeignet, am meisten bevorzugt sind jedoch aromatische Öle, insbesondere aromatische Mineralöle.

Vorzugsweise werden Weichmacher und ganz besonders bevorzugt hierunter die paraffinischen und/oder naphthenischen und insbesondere aromatische Prozessöle in einer Menge von 0 bis 100 phr, vorzugsweise 10 bis 70 phr, besonders bevorzugt 20 bis 60 phr, insbesondere von 20 bis 50 phr, eingesetzt.

Beispiele von Antidegradantien sind Chinoline wie TMQ (2,2,4-Trimethyl-1,2-dihydrochinolin) und Diamine wie 6-PPD (N-(1,3-dimethylbutyl)-N'-Phenyl-p-Phenylendiamin).

Zur Verbesserung der Haftfähigkeit der vulkanisierten Kautschukmischung der vorliegenden Erfindung an andere benachbarte Gummibestandteile können sogenannte, die Haftfähigkeit erhöhende Harze eingesetzt werden. Besonders geeignete Harze sind solche auf Phenolbasis vorzugsweise aus der Gruppe bestehend aus phenolischen Harzen, Phenol-Formaldehyd-Harzen und Phenol-Acetylen-Harzen. Neben den Harzen auf Phenolbasis können auch aliphatische Kohlenwasserstoffharze wie beispielsweise Escorez^{™} 1102 RM der Firma ExxonMobil, aber auch aromatische Kohlenwasserstoffharze, eingesetzt werden. Aliphatische Kohlenwasserstoffharze verbessern insbesondere die Haftfähigkeit gegenüber anderen Kautschuk-Komponenten des Reifens. Sie besitzen in der Regel eine geringere Haftfähigkeit als die Harze auf Phenolbasis und können alleine oder in Mischung mit den Harzen auf Phenolbasis eingesetzt werden.

Werden die Haftfähigkeit erhöhende Harze eingesetzt, dann vorzugsweise solche, gewählt aus der Gruppe bestehend aus Harzen auf Phenolbasis, aromatischen Kohlenwasserstoffharzen und aliphatische Kohlenwasserstoffharzen. Vorzugsweise beträgt deren Anteil 0 bis 15 phr bzw. 1 bis 15 phr, besonders bevorzugt 2 bis 10 phr und ganz besonders bevorzugt 3 bis 8 phr.

### Kit-of-parts

Ein weiterer Gegenstand der vorliegenden Erfindung ist ein Kit-of-parts umfassend, vorzugsweise bestehend aus, in räumlich getrennter Form
als Teil (A) eine Kautschukzusammensetzung, die wenigstens die erfindungsgemäß eingesetzte Kautschukkomponente K und wenigstens die erfindungsgemäß eingesetzte Füllstoffkomponente F umfasst, wobei Teil (A) des Kit-of-parts jedoch nicht das wenigstens eine Peroxid des erfindungsgemäß eingesetzten Vulkanisations-Systems VS umfasst, und
als Teil (B) ein erfindungsgemäß eingesetztes Vulkanisations-System VS umfassend wenigstens ein Peroxid.

Teil (A) ist somit als solcher noch nicht mittels Peroxid vulkanisierbar und stellt somit zu diesem Zeitpunkt eine mittels Peroxid nicht vulkanisierbare Kautschukzusammensetzung dar. Die Vulkanisation mittels Peroxid ist erst nach Zusammenmischen der Teile (A) und (B) möglich.

Vorzugsweise sind im Kit-of-parts die Komponenten K und F der erfindungsgemäßen Kautschukzusammensetzung einerseits und das Vulkanisations-System VS andererseits räumlich voneinander getrennt und können so gelagert werden. Das Kit-of-parts dient der Herstellung einer vulkanisierbaren Kautschukzusammensetzung. So kann beispielsweise die den einen Teil des Kit-of-parts ausmachende Kautschukzusammensetzung umfassend Komponenten K und F und gegebenenfalls weitere Bestandteile einschließlich von Peroxid unterschiedliche Vulkanisatoren wie Zinkoxid und/oder wenigstens eine Fettsäure als Teil (A) in Stufe 1 des weiter unten beschriebenen Verfahrens zur Herstellung einer vulkanisierbaren Kautschukmischung eingesetzt werden und der zweite Teil des Kit-of-parts, nämlich das Vulkanisations-System VS als Teil (B) umfassend wenigstens das Peroxid, in Stufe 2 besagten Verfahrens.

Im Gegensatz zur vulkanisierbaren Kautschukzusammensetzung, die sowohl die Bestandteile K und F der erfindungsgemäßen Kautschukzusammensetzung als auch des zugehörigen Vulkanisations-System VS umfassend das wenigstens eine Peroxid vorzugsweise homogen vermischt enthält, so dass die vulkanisierbare Kautschukzusammensetzung direkt vulkanisiert werden kann, sind im erfindungsgemäßen Kit-of-parts die Kautschukzusammensetzung umfassend die Komponenten K und F und das Vulkanisations-System VS umfassend das wenigstens eine Peroxid somit räumlich voneinander getrennt.

Alle im Zusammenhang mit der erfindungsgemäßen vulkanisierbaren Kautschukzusammensetzung hierin zuvor beschriebenen bevorzugten Ausführungsformen sind auch bevorzugte Ausführungsformen hinsichtlich des erfindungsgemäßen Kit-of-parts.

Vorzugsweise umfasst das erfindungsgemäße Kit-of-parts als
Teil (A) eine Kautschukzusammensetzung umfassend wenigstens die Komponenten K und F und als
Teil (B) ein Vulkanisations-System VS umfassend wenigstens ein Peroxid und zudem Zinkoxid, wobei Zinkoxid alternativ innerhalb von Teil (A) vorliegen kann.

Besonders bevorzugt umfasst das erfindungsgemäße Kit-of-parts als
Teil (A) eine Kautschukzusammensetzung umfassend wenigstens die Komponenten K und F und als
Teil (B) ein Vulkanisations-System umfassend wenigstens ein Peroxid, Zinkoxid und wenigstens eine gesättigte Fettsäure wie Stearinsäure und/oder gegebenenfalls Zinkstearat, wobei zumindest Zinkoxid und/oder die Fettsäure alternativ innerhalb von Teil (A) vorliegen kann/können.

### Verfahren zur Herstellung der vulkanisierbaren Kautschukzusammensetzung

Ein weiterer Gegenstand der vorliegenden Erfindung ist ein Verfahren zur Herstellung der vulkanisierbaren erfindungsgemäßen Kautschukzusammensetzung.

Alle im Zusammenhang mit der erfindungsgemäßen vulkanisierbaren Kautschukzusammensetzung und dem erfindungsgemäßen Kit-of-parts hierin zuvor beschriebenen bevorzugten Ausführungsformen sind auch bevorzugte Ausführungsformen hinsichtlich des erfindungsgemäßen Verfahrens.

Die Herstellung der erfindungsgemäßen vulkanisierbaren Kautschukzusammensetzung erfolgt vorzugsweise zweistufig in den nachfolgend näher beschriebenen Stufen 1 und 2. Wie nachstehend weiter ausgeführt wird, ist aber alternativ auch eine einstufige Verfahrensführung möglich.

### Zweistufiges Verfahren

In der ersten Stufe (Stufe 1) wird zunächst eine Kautschukzusammensetzung als Grundmischung (Masterbatch) hergestellt, indem alle Bestandteile, die zur Herstellung der erfindungsgemäßen vulkanisierbaren Kautschukzusammensetzung eingesetzt werden miteinander vermischt werden, jedoch mit Ausnahme wenigstens des Peroxids. In der zweiten Stufe (Stufe 2) erfolgt die Zumischung wenigstens des Peroxids und gegebenenfalls zusätzlicher Bestandteile des Vulkanisation-Systems VS zu der nach Stufe 1 erhaltenen Kautschukzusammensetzung.

### Stufe 1

Vorzugsweise wird der wenigstens eine Kautschuk, der in der Kautschukkomponente K der erfindungsgemäßen Kautschukzusammensetzung enthalten ist, sowie gegebenenfalls einsetzbare davon verschiedene vorzugsweise die Haftfähigkeit verbessernde Harze vorgelegt. Letztere können jedoch auch alternativ im Anschluss mit weiteren Additiven zugegeben werden. Vorzugsweise besitzen die Kautschuke mindestens Raumtemperatur (23 °C) oder werden vorzugsweise vorgewärmt auf Temperaturen von maximal 50 °C, vorzugsweise maximal 45 °C und besonders bevorzugt maximal 40 °C eingesetzt. Besonders bevorzugt werden die Kautschuke für einen kurzen Zeitraum vorgeknetet, bevor die anderen Bestandteile zugegeben werden. Werden zur späteren Vulkanisationskontrolle Inhibitoren eingesetzt, wie beispielsweise Magnesiumoxid, so werden diese vorzugsweise ebenfalls zu diesem Zeitpunkt zugegeben.

Anschließend wird wenigstens ein erfindungsgemäß eingesetzter organischer Füllstoff und gegebenenfalls weitere Füllstoffe zugegeben, vorzugsweise mit Ausnahme von Zinkoxid, da dieses wie vorstehend erwähnt in den erfindungsgemäßen Kautschukzusammensetzungen als Bestandteil des Vulkanisations-Systems zum Einsatz kommt und daher hierin nicht als Füllstoff betrachtet wird. Die Zugabe des wenigstens einen organischen Füllstoffs und gegebenenfalls weiterer Füllstoffe erfolgt vorzugsweise inkrementell.

Vorteilhaft, jedoch nicht zwingend, werden Weichmacher und andere Bestandteile wie von Peroxid unterschiedliche Vulkanisatoren wie beispielsweise Stearinsäure und/oder Zinkstearat und/oder Zinkoxid erst im Anschluss an die Zugabe des wenigstens einen organischen Füllstoffs beziehungsweise der weiteren Füllstoffe, sofern verwendet, zugeben. Hierdurch wird die Einarbeitung des wenigstens einen organischen Füllstoffs und sofern vorhanden der weiteren Füllstoffe erleichtert. Es kann jedoch von Vorteil sein, einen Teil des wenigstens einen organischen Füllstoffs oder sofern vorhanden der weiteren Füllstoffe zusammen mit den Weichmachern und den gegebenenfalls eingesetzten weiteren Bestandteilen einzuarbeiten.

Die höchsten, bei der Herstellung der Kautschukzusammensetzung in der ersten Stufe erhaltenen Temperaturen ("dump temperature"), sollten 170 °C nicht überschreiten, da oberhalb dieser Temperaturen eine teilweise Zersetzung der reaktiven Kautschuke und/oder der organischen Füllstoffe möglich ist. Möglich sind aber insbesondere in Abhängigkeit vom eingesetzten Kautschuk auch Temperaturen von >170 °C, beispielsweise bis zu <200 °C. Vorzugsweise beträgt die Höchsttemperatur bei der Herstellung der Kautschukzusammensetzung der ersten Stufe zwischen 80 °C und <200 °C, besonders bevorzugt zwischen 90 °C und 190 °C, am meisten bevorzugt zwischen 95 °C und 170 °C.

Die Mischung der Bestandteile der Kautschukzusammensetzung erfolgt üblicherweise mittels Innenmischern, die mit tangierenden oder kämmenden (das heißt ineinandergreifenden) Rotoren ausgestattet sind. Letztere erlauben in der Regel eine bessere Temperatursteuerung. Mischer mit tangierenden Rotoren werden auch als Tangentialmischer bezeichnet. Die Mischung kann jedoch beispielsweise auch unter Verwendung eines Doppelwalzenmischers erfolgen. Je nach verwendetem Kautschuk kann der Mischprozess konventionell, beginnend mit der Zugabe des Polymers oder Up-side-down, also nach Zugabe aller anderen Mischungsbestandteile am Ende erfolgen. Up-side-down wird meist bei den Kautschuken EPM und EPDM angewendet.

Nach erfolgter Herstellung der Kautschukzusammensetzung wird diese vorzugsweise vor Durchführung der zweiten Stufe abgekühlt. Ein derartiges Verfahren wird auch als Alterung bezeichnet. Typische Alterungszeiträume betragen 6 bis 24 Stunden, vorzugsweise 12 bis 24 Stunden.

### Stufe 2

In der zweiten Stufe wird in die Kautschukzusammensetzung der ersten Stufe wenigstens das Peroxid, vorzugsweise aber zusätzlichen weitere Bestandteile des Vulkanisations-Systems VS eingearbeitet, wodurch eine vulkanisierbare Kautschukzusammensetzung gemäß der vorliegenden Erfindung erhalten wird. Vorzugsweise wird in Stufe 2 ebenfalls das Co-Agens eingearbeitet, sofern vorhanden/genutzt.

Wird als Vulkanisations-System neben Peroxid zudem Zinkoxid und zudem optional wenigstens eine gesättigte Fettsäure wie Stearinsäure eingesetzt, so kann in Stufe 2 die Zugabe aller dieser Bestandteile erfolgen. Es ist jedoch auch möglich, diese Bestandteile mit Ausnahme des Peroxids bereits in Stufe 1 in die Kautschukzusammensetzung zu integrieren.

Die höchsten, bei der Herstellung der Zumischung des Vulkanisations-Systems zur Kautschukzusammensetzung in der zweiten Stufe erhaltenen Temperaturen ("dump temperature"), müssen unterhalb der Temperatur liegen, bei der die Spaltung des verwendeten Peroxids startet, und sollten vorzugsweise 130 °C, besonders bevorzugt 125 °C nicht überschreiten. Ein bevorzugter Temperaturbereich beträgt zwischen 70 °C und 125 °C, besonders bevorzugt 80 °C und 120 °C. Bei Temperaturen oberhalb der für das Vernetzungssystem maximalen Temperatur von 105 bis 120 °C kann es zu einer vorzeitigen Vulkanisation kommen.

Nach erfolgter Zumischung des Vulkanisations-Systems in Stufe 2 wird die Zusammensetzung vorzugsweise abgekühlt.

Im vorgenannten zweistufigen Verfahren wird somit zunächst in der ersten Stufe eine Kautschukzusammensetzung erhalten, die in der zweiten Stufe zu einer vulkanisierbaren Kautschukzusammensetzung ergänzt wird.

### Einstufiges Verfahren

Im Fall des einstufigen Verfahrens werden alle Bestandteile, die zur Herstellung der erfindungsgemäßen vulkanisierbaren Kautschukzusammensetzung eingesetzt werden, innerhalb einer Stufe miteinander vermischt, einschließlich des Vulkanisations-Systems. Vorzugsweise wird dabei das Peroxid des Vulkanisations-Systems, vorzugsweise zusammen mit dem Co-Agens, erst nach erfolgter Zugabe der Gesamtmenge des eingesetzten Kautschuks und der Gesamtmenge des eingesetzten Füllstoffs sowie gegebenenfalls zusätzlicher Bestandteile zu der Kautschukmischung hinzugegeben. Vorzugsweise erfolgt die Zugabe des eingesetzten Füllstoffs derart, dass dieser in wenigstens zwei Teilen portioniert zu verschiedenen Zeitpunkten zugegeben wird, wobei zum Zeitpunkt der ersten Zugabe vorzugsweise bereits die gesamte Menge des eingesetzten Kautschuks vorgelegt worden ist. Insbesondere erfolgt im Fall des einstufigen Verfahrens keine Abkühlung/keine Relaxation vor Zugabe der Bestandteile des Vulkanisations-Systems.

### Verfahren zur Weiterverarbeitung der erfindungsgemäßen vulkanisierbaren Kautschukzusammensetzung

Die hergestellten vulkanisierbaren Kautschukzusammensetzungen durchlaufen vor der Vulkanisation vorzugsweise auf die Endartikel abgestimmte Verformungsprozesse. Kautschukzusammensetzungen werden vorzugsweise mittels Extrusion bzw. Kalandrieren in eine geeignete Form gebracht, die für den Vulkanisationsprozess nötig ist. Dabei kann die Vulkanisation in Vulkanisationsformen über Druck und Temperatur erfolgen oder die Vulkanisation erfolgt drucklos in temperierten Kanälen, in denen Luft oder flüssige Materialien für den Wärmeübergang sorgen.

### Vulkanisierte Kautschukzusammensetzung

Ein weiterer Gegenstand der vorliegenden Erfindung ist eine vulkanisierte Kautschukzusammensetzung, welche erhältlich ist durch Vulkanisation der erfindungsgemäßen vulkanisierbaren Kautschukzusammensetzung oder durch Vulkanisation einer durch Zusammengeben und Vermischen der beiden Teile (A) und (B) des erfindungsgemäßen Kit-of-parts erhältlichen vulkanisierbaren Kautschukzusammensetzung.

Alle im Zusammenhang mit der erfindungsgemäßen vulkanisierbaren Kautschukzusammensetzung und dem erfindungsgemäßen Kit-of-parts sowie dem erfindungsgemäßen Verfahren hierin zuvor beschriebenen bevorzugten Ausführungsformen sind auch bevorzugte Ausführungsformen hinsichtlich der erfindungsgemäßen vulkanisierten Kautschukzusammensetzung.

Üblicherweise wird unter Druck und/oder Hitzeeinwirkung vulkanisiert. Geeignete Vulkanisationstemperaturen betragen vorzugsweise von 140 °C bis 200 °C, besonders bevorzugt 150 °C bis 180 °C. Optional erfolgt die Vulkanisation bei einem Druck im Bereich von 50 bis 175 bar. Es ist jedoch auch möglich, die Vulkanisation in einem Druckbereich von 0,1 bis 1 bar durchzuführen, beispielsweise im Fall von Profilen.

Die aus den erfindungsgemäßen vulkanisierbaren Kautschukzusammensetzungen erhaltenen vulkanisierten Kautschukzusammensetzungen besitzen vorzugsweise eine Shore-A-Härte im Bereich von mehr als 40 bis weniger als 80, besonders bevorzugt von 45 bis 75 und ganz besonders bevorzugt von 50 bis 70 und/oder eine Zugfestigkeit im Bereich von mehr als 8 MPa, besonders bevorzugt von mehr als 8,5 MPa, ganz besonders bevorzugt von mehr als 9 MPa, und/oder eine Bruchdehnung von >300 %, vorzugsweise von >350%, besonders bevorzugt von >400%, und/oder einen Druckverformungsrest (nach 22 h bei 70 °C) von höchstens 13,0 %, vorzugsweise von <13,0 % und/oder einen Druckverformungsrest (nach 22 h bei 100 °C) von höchstens 20,0 %, vorzugsweise von <20,0 %, besonders bevorzugt von <19,5 %. Die Methoden zur Bestimmung der Shore-A-Härte, der Zugfestigkeit, der Bruchdehnung und der Druckverformungsreste sind nachfolgend innerhalb der Methodenbeschreibung angegeben.

### Verwendung

Ein weiterer Gegenstand der vorliegenden Erfindung ist eine Verwendung der erfindungsgemäßen vulkanisierbaren Kautschukzusammensetzung, des erfindungsgemäßen Kit-of-parts oder der erfindungsgemäßen vulkanisierten Kautschukzusammensetzung zum Einsatz bei der Herstellung von technischen Gummiartikeln, vorzugsweise bei der Herstellung von technischen Gummiartikeln mit Dichtfunktion.

Alle im Zusammenhang mit der erfindungsgemäßen vulkanisierbaren Kautschukzusammensetzung, dem erfindungsgemäßen Kit-of-parts, dem erfindungsgemäßen Verfahren und der erfindungsgemäßen vulkanisierten Kautschukzusammensetzung hierin zuvor beschriebenen bevorzugten Ausführungsformen sind auch bevorzugte Ausführungsformen hinsichtlich der vorgenannten erfindungsgemäßen Verwendung.

Der Begriff "technische Gummiartikel" (englisch: mechanical rubber goods, MRG) ist dem Fachmann bekannt. Beispiele technischer Gummiartikel sind Profile, Dichtungen, Dämpfer und/oder Schläuche.

### Technischer Gummiartikel

Ein weiterer Gegenstand der vorliegenden Erfindung ist ein technischer Gummiartikel, vorzugsweise mit Dichtfunktion, hergestellt unter Einsatz der erfindungsgemäßen vulkanisierbaren Kautschukzusammensetzung, des erfindungsgemäßen Kit-of-parts, oder der erfindungsgemäßen vulkanisierten Kautschukzusammensetzung.

Alle im Zusammenhang mit der erfindungsgemäßen vulkanisierbaren Kautschukzusammensetzung, dem erfindungsgemäßen Kit-of-parts, dem erfindungsgemäßen Verfahren und der erfindungsgemäßen vulkanisierten Kautschukzusammensetzung sowie der erfindungsgemäßen Verwendung hierin zuvor beschriebenen bevorzugten Ausführungsformen sind auch bevorzugte Ausführungsformen hinsichtlich der vorgenannten erfindungsgemäßen technischen Gummiartikel.

### Verwendung des erfindungsgemäß eingesetzten organischen Füllstoffs

Ein weiterer Gegenstand der vorliegenden Erfindung ist eine Verwendung des erfindungsgemäß eingesetzten organischen Füllstoffs zur Erhöhung der Bruchdehnung und gleichzeitiger Erniedrigung des Druckverformungsrestes in vulkanisierten Kautschukzusammensetzungen, die erhältlich sind durch Vulkanisation mittels wenigstens eines Peroxids, wobei die hierzu eingesetzten vulkanisierbaren Kautschukzusammensetzungen neben dem wenigstens einen Peroxid und dem organischen Füllstoff zudem wenigstens einen Kautschuk enthalten, welcher mittels des wenigstens einen Peroxids vernetzbar ist.

Alle im Zusammenhang mit der erfindungsgemäßen vulkanisierbaren Kautschukzusammensetzung, dem erfindungsgemäßen Kit-of-parts, dem erfindungsgemäßen Verfahren und der erfindungsgemäßen vulkanisierten Kautschukzusammensetzung, der vorgenannten erfindungsgemäßen technischen Gummiartikel sowie der vorgenannten erfindungsgemäßen Verwendung hierin zuvor beschriebenen bevorzugten Ausführungsformen sind auch bevorzugte Ausführungsformen hinsichtlich der erfindungsgemäßen Verwendung des erfindungsgemäß eingesetzten organischen Füllstoffs. Bruchdehnung und Druckverformungsrest werden wie im nachstehenden "Methoden-Teil" beschrieben ermittelt.

### Bestimmungsmethoden

### 1. Bestimmung des ¹⁴C-Gehalts

Die Bestimmung des ¹⁴C-Gehalts (Gehalt an biobasiertem Kohlenstoff) erfolgt mittels der Radiokarbonmethode gemäß DIN EN 16640:2017-08.

### 2. Bestimmung der Korngrößenverteilung

Die Korngrößenverteilung lässt sich mittels Laserbeugung des in Wasser dispergierten Materials (1 Gew.-% in Wasser) nach ISO 13320:2009 bestimmen, wobei der Messung eine Ultraschallbehandlung von 12000 Ws vorgeschaltet ist. Die Angabe des Volumenanteils erfolgt z.B. als d99 in µm (Durchmesser der Körner von 99% des Volumens der Probe liegt unter diesem Wert).

### 3. Bestimmung des Kohlenstoffgehalts

Der Kohlenstoffgehalt wird durch Elementaranalyse gemäß DIN 51732: 2014-7 bestimmt.

### 4. Bestimmung des Sauerstoffgehalts

Der Sauerstoffgehalt wird durch Hochtemperaturpyrolyse mit Hilfe des EuroEA3000 CHNS-O Analyzers der Firma EuroVector S.p.A. ermittelt. Dabei wird der CHNS-Gehalt mittels des vorgenannten Analysiergeräts ermittelt der Sauerstoffgehalt im Anschluss als Differenz berechnet (100 - CHNS).

### 5. Bestimmung des Trockenstoffgehalts der eingesetzten organischen Füllstoffe

Der Trockenstoffgehalt der Probe wurde in Anlehnung an DIN 51718:2002-06 wie folgt bestimmt. Hierzu wurde die Feuchtewaage MA100 der Fa. Sartorius auf eine Trockentemperatur von 105 °C geheizt. Die trockene Probe, soweit nicht schon als Pulver vorliegend, wurde zu einem Pulver gemörsert bzw. gemahlen. Ca. 2 g der zu messenden Probe wurden auf einer passenden Aluminiumschale in der Feuchtewaage eingewogen und anschließend wurde die Messung gestartet. Sobald sich das Gewicht der Probe für 30 s nicht mehr als 1 mg änderte, galt dies Gewicht als konstant und die Messung wurde beendet. Der Trockenstoffgehalt entspricht dann dem angezeigten Gehalt der Probe in Gew.-%. Für jede Probe wurde mindestens eine Doppelbestimmung durchgeführt. Die gewichteten Mittelwerte wurden angegeben.

### 6. Bestimmung des pH-Werts der eingesetzten organischen Füllstoffe

Die Bestimmung des pH-Wertes erfolgte in Anlehnung an die Norm ASTM D 1512 wie folgt. Die trockene Probe wurde, soweit nicht schon als Pulver vorliegend, zu einem Pulver gemörsert bzw. gemahlen. Jeweils 5 g Probe und 50 g vollentionisiertes Wasser wurden in einem Becherglas eingewogen. Die Suspension wurde unter ständigem Rühren mittels eines Magnetrührers mit Heizfunktion und Rührfisch auf eine Temperatur von 60°C erhitzt und die Temperatur für 30 min bei 60 °C gehalten. Anschließend wurde die Heizfunktion des Rührers deaktiviert, so dass der Ansatz unter Rühren abkühlen konnte. Nach dem Abkühlen wurde das verdunstete Wasser durch erneute Zugabe von vollentionisiertem Wasser aufgefüllt und erneut für 5 min gerührt. Mit einem geeichten Messgerät wurde der pH-Wert der Suspension ermittelt. Die Temperatur der Suspension sollte 23°C (± 0,5 °C) betragen. Für jede Probe wurde eine Doppelbestimmung durchgeführt und der gemittelte Wert angegeben.

### 7. Bestimmung des Aschegehalts der organischen Füllstoffe

Der wasserfreie Aschegehalt der Proben wurde gemäß der Norm DIN 51719 durch thermogravimetrische Analyse wie folgt bestimmt: Vor dem Einwiegen wurde die Probe gemahlen oder gemörsert. Vor der Aschebestimmung wird der Trockensubstanz-Gehalt des eingewogenen Materials ermittelt. Das Probenmaterial wurde auf 0,1 mg genau in einem Tiegel eingewogen. Der Ofen wurde samt Probe mit einer Aufheizrate von 9 ° K/min auf eine Zieltemperatur von 815 °C aufgeheizt und anschließend für 2 h bei dieser Temperatur gehalten. Anschließend wurde der Ofen auf 300 °C abgekühlt bevor die Proben entnommen wurden. Die Proben wurden im Exsikkator bis auf Umgebungstemperatur abgekühlt und erneut gewogen. Die verbliebene Asche wurde in Bezug zur Einwaage gesetzt und so der gewichtsprozentuale Gehalt an Asche bestimmt. Für jede Probe wurde eine Dreifachbestimmung durchgeführt und der gemittelte Wert angegeben.

### 8. Bestimmung der BET- und STSA-Oberfläche der organischen Füllstoffe

Die spezifische Oberfläche des zu untersuchenden Füllstoffs wurde gemäß der für Industrieruße (Carbon Black) vorgesehenen Norm ASTM D 6556 (2019-01-01) durch Stickstoffadsorption bestimmt. Nach dieser Norm wurde zudem die BET-Oberfläche (spezifische Gesamtoberfläche nach Brunauer, Emmett und Teller) sowie die externe Oberfläche (STSA-Oberfläche; Statistical Thickness Surface Area) wie folgt bestimmt.

Die zu analysierende Probe wurde vor der Messung auf einen Trockensubstanz-Gehalt ≥ 97,5 Gew.-% bei 105 °C getrocknet. Zudem wurde die Messzelle vor Einwiegen der Probe für mehrere Stunden im Trockenofen bei 105 °C getrocknet. Die Probe wurde anschließend unter Verwendung eines Trichters in die Messzelle eingefüllt. Bei Verunreinigung des oberen Messzellenschafts während des Befüllens wurde dieser mittels einer geeigneten Bürste oder einem Pfeifenreiniger gesäubert. Bei stark fliegendem (elektrostatischem) Material wurde zusätzlich zur Probe Glaswolle eingewogen. Die Glaswolle diente dazu, während des Ausheizvorganges eventuell auffliegendes Material, welches das Gerät verschmutzen könnte, zurückzuhalten.

Die zu analysierende Probe wurde bei 150 °C für 2 Stunden ausgeheizt, der Al₂O₃-Standard bei 350 °C für 1 Stunde. Für die Bestimmung wurde in Abhängigkeit vom Druckbereich folgende N₂-Dosierung verwendet:
p/p0 = 0 - 0,01: N₂-Dosierung: 5ml/g
p/p0 = 0,01 - 0,5: N₂-Dosierung: 4ml/g.

Zur Bestimmung der BET wurde im Bereich von p/p0 = 0,05 - 0,3 mit mind. 6 Messpunkten extrapoliert. Zur Bestimmung der STSA wurde im Bereich der Schichtdicke des adsorbierten N₂ von t = 0,4 - 0,63 nm (entspricht p/p0 = 0,2 - 0,5) mit mind. 7 Messpunkten extrapoliert.

### 9. Bestimmung der Härte

Die Bestimmung der Shore-A-Härte von vulkanisierten Kautschukzusammensetzungen erfolgte mit digitalen Shore-Härteprüfer der Fa. Sauter GmbH gemäß DIN ISO 48-4:2021-02 bei 23 °C. Um die in der Norm geforderte Dicke des Probekörpers von mindestens 6 mm zu erzielen, wurde der Probekörper aus nicht mehr als 3 Schichten zusammengesetzt. Hierfür wurden 3 Stäbe S2, die für die Durchführung der Zugprüfung nach ISO 37:2011 ausgestanzt wurden, übereinandergestapelt. An jedem Probenstapel wurden fünf Messungen an unterschiedlichen Punkten des Stapels durchgeführt. Die erhaltenen Ergebnisse stellen den Durchschnittswert dieser fünf Messungen dar. Zwischen Vulkanisation und Prüfung wurden die Proben für mindestens 16 h bei Raumtemperatur gelagert.

### 10. Bestimmung der Vernetzungsdichte/Reaktionskinetik

Die Vernetzungsdichte und die Reaktionskinetik der Kautschukzusammensetzungen wurden gemäß DIN 53529-3:1983-06 bei 175°C, jedoch bei einer Auslenkung von 3° ermittelt. Die Messzeit betrug 15 min. Hierbei wurden das minimale und maximale Drehmoment (M_{L}, M_{H}) bestimmt. Hieraus wurde die Differenz Δ (M_{H}-M_{L}) errechnet (maximales minus minimales Drehmoment). Des Weiteren wurden die Zeiträume bestimmt, in welchen das Drehmoment, ausgehend vom Zeitpunkt des minimalen Drehmoments M_{L} 10 %, 50 % bzw. 90 % des maximalen Drehmoments M_{H} erreicht. Die Zeiträume wurden als T₁₀, T₅₀ und T₉₀ bezeichnet.

### 11. Bestimmung des Zug-Dehnungsverhaltens

Das Zug-Dehnungsverhalten einschließlich Zugfestigkeit und Bruchdehnung wurde an vulkanisierten Kautschukzusammensetzungen gemäß ISO 37:2011 ermittelt.

### 12. Bestimmung der Druckverformung

Die Druckverformung wurde an vulkanisierten Kautschukzusammensetzungen gemäß DIN ISO 815-1:2016-09 ermittelt. Pro Probe wurden drei Prüfkörper getestet. Unmittelbar vor der Vulkanisation wurde die Mischung auf einer Walze plastiziert, um das Fließverhalten zu verbessern. Es wurde darauf geachtet, dass die Mischung mit der bloßen Hand fühlbar warm wird. Aus dem etwa 7 mm dicken Walzenfell wurden Streifen ausgeschnitten, die der Breite der Kavitäten in der Form entsprechen, um weite Fließwege, die einen Einfluss auf die Festigkeit haben, zu verhindern. Der Druck der Vulkanisationspresse betrug 200 bar. Es wurde ein vorprogrammierter Presszyklus zum Vulkanisieren der Prüfkörper gemäß nachstehender Tabelle verwendet:

| *Zyklusschritt* | *Wert* | *Heizrate [°C*/*min]* |
|---|---|---|
| HEIZEN (°C) | 175,0 | 50 |
| SCHLIESSEN (s) | 5 | |
| HALTEN (s) | 1 | |
| ÖFFNEN (s) | 0,3 | |
| HALTEN (s) | 1 | |
| SCHLIESSEN (s) | 2 | |
| HALTEN (s) | 1 | |
| ÖFFNEN (s) | 0,3 | |
| SCHLIESSEN (s) | 2 | |
| HALTEN (min) | T₉₀ + 6 | |
| ÖFFNEN (s) | 4 | |

Die Vulkanisationszeit entspricht dem Wert T₉₀, der im Rahmen der Bestimmung der Vernetzungsdichte/Reaktionskinetik ermittelt wird, plus eine Minute pro Millimeter Prüfkörperdicke (also plus sechs bei Verwendung der Vulkanisationsform gemäß DIN ISO 815-1 Typ B). Die vulkanisierten Prüfkörper wurden sofort der Vulkanisationsform entnommen, um eine unkontrollierte Nachvernetzung zu vermeiden. Es wurde darauf geachtet, dass die Prüfkörper bei der Entnahme nicht beschädigt wurden. Die Verwendung von Werkzeugen zum Ausdrücken der Probekörper war nur dann gestattet, wenn eine Beschädigung der Prüfkörper ausgeschlossen war. Die Prüfkörper wurden zum Kühlen auf dem Kühltisch abgelegt. Nach dem Abkühlen wurde der überstehende Rand entfernt. Zwischen Vulkanisation und Prüfung wurden die Proben für mindestens 16 h bei Raumtemperatur gelagert. Der Wärmeschrank wurde auf Prüftemperatur vorgeheizt. Die Beanspruchungsdauer betrug 22 h, gemessen ab dem Moment der Platzierung der Druckverformungseinheit in den Wärmeschrank. Die Prüftemperatur betrug 70 °C bzw. 100 °C. Die aufgebrachte Druckbeanspruchung betrug 25 % der Ausgangsdicke des Prüfkörpers. Sobald sich im Inneren des Wärmeschranks die Prüftemperatur eingestellt hatte, wurde nach Aufbringen der Druckbeanspruchung der mittlere Bereich des Wärmeschrankes mit der die Probekörper enthaltenden Druckverformungseinheit unverzüglich bestückt. Nach Ablauf der erforderlichen Prüfdauer wurde die Druckverformungseinheit in Anlehnung an Verfahren A aus dem Wärmeschrank genommen, die Probekörper sofort entlastet und schnell auf den Kühltisch gelegt. Dort wurden sie zur Erholung für 30 min belassen und dann auf ihre Dicke vermessen.

### 13. Bestimmung der Dichte der vulkanisierten Kautschukzusammensetzung

Die Dichte des vulkanisierten Compounds wurde gemäß ISO 2781:2018 Methode A bestimmt. Als Eintauchmedium wurde Ethanol (96 %) verwendet. Die erhaltenen Ergebnisse stellen den Durchschnittswert von drei Messungen dar. Zwischen Vulkanisation und Prüfung wurden die Proben für mindestens 16 h bei Raumtemperatur gelagert.

### 14. Materialdichte des eingesetzten Füllstoffs

Die Materialdichte des Füllstoffs wurde mittels Helium-Pyknometer nach ISO 21687 bestimmt.

### 15. Bestimmung der oberflächenverfügbaren OH-Gruppen (OH-Gruppen-Dichte)

Eine Bestimmung der oberflächenverfügbaren, sauren Hydroxylgruppen einschließlich phenolischer OH-Gruppen und Phenolat-Gruppen erfolgte qualitativ und quantitativ kolorimetrisch gemäß Sipponen. Das Verfahren nach Sipponen beruht auf der Adsorption des basischen Farbstoffs Azure B an die an der Füllstoffoberfläche zugänglichen sauren Hydroxylgruppen und wird im Detail im Artikel "Determination of surface-accessible acidic hydroxyls and surface area of lignin by cation dye adsorption" (Bioresource Technology 169 (2014) 80-87) beschrieben. Die Menge der oberflächenverfügbaren sauren Hydroxylgruppen wird in mmol/g Füllstoff angegeben.

### Beispiele und Vergleichsbeispiele

Die nachfolgenden Beispiele und Vergleichsbeispiele dienen der Erläuterung der Erfindung, sind jedoch nicht einschränkend auszulegen.

### 1. Herstellung eines erfindungsgemäß eingesetzten organischen Füllstoffs

### 1.1 Als erfindungsgemäßer organischer Füllstoff wurde ein durch hydrothermale Behandlung erhältliches Lignin L1 eingesetzt.

Das durch hydrothermale Behandlung erhältliche Lignin **L1** wurde analog dem in WO 2017/085278 A1 beschriebenen Verfahren zur Herstellung von durch hydrothermale Behandlung erhältlichen Ligninen hergestellt.

Hierfür wird eine Lignin enthaltende Flüssigkeit bereitgestellt. Zunächst werden Wasser und Lignin gemischt und eine ligninhaltige Flüssigkeit mit einem Gehalt an organischer Trockenmasse von 15 Gew.-% zubereitet. Das Lignin wird anschließend in der ligninhaltigen Flüssigkeit überwiegend gelöst. Hierzu wird der pH-Wert durch Zugabe von NaOH eingestellt. Die Herstellung der Lösung wird durch intensives Durchmischen bei 80°C über 3 h unterstützt. Die Lignin enthaltende Flüssigkeit wird einer hydrothermalen Behandlung unterzogen und so ein Feststoff erhalten. Dabei wird die hergestellte Lösung mit 2K/Min auf die Reaktionstemperatur von 220 °C aufgeheizt, welche über eine Reaktionsdauer von 8 h gehalten wird. Anschließend erfolgt eine Abkühlung. Im Ergebnis wird eine wässrige Feststoff-Suspension erhalten. Durch Filtration und Wäsche wird der Feststoff weitgehend entwässert und gewaschen. Die anschließende Trocknung und thermische Behandlung erfolgt unter Stickstoff in einer Wirbelschicht, wobei für die Trocknung auf eine Temperatur von 50°C mit 1,5 K/min aufgeheizt und 2,5 h gehalten wird und anschließend für die thermische Behandlung mit 1,5 K/Min auf die Temperatur von 190°C aufgeheizt, für eine Dauer von 15 min gehalten und wieder abgekühlt wird. Der getrocknete Feststoff wird auf einer Gegenstrahlmühle mit Stickstoff auf einen d99-Wert <10 µm deagglomeriert (bestimmt gemäß der vorstehend beschriebenen Bestimmungsmethode).

Das durch hydrothermale Behandlung erhältliche Lignin **L1** wurde wie in nachstehender Tabelle 1.1 angegeben mittels der vorstehend genannten Methoden charakterisiert.

**Tabelle 1.1 - Eigenschaften des durch hydrothermale Behandlung erhältlichen Lignins L1**

| *Test* | *Einheit* | *Lignin **L1*** |
|---|---|---|
| STSA | m²/g | 51,6 |
| BET | m²/g | 55,5 |
| ¹⁴C-Gehalt | Bq/g C | 0,23 |
| Sauerstoffgehalt | Gew.-% | 20,7 |
| Kohlenstoffgehalt | Gew.-% | 72,7 |
| Aschegehalt | Gew.-% | 3,4 |
| pH-Wert | ./. | 9,0 |
| Trockenstoffgehalt | Gew.-% | 97,9 |
| Materialdichte | g/cm³ | 1,32 |
| d99 | µm | 5,51 |
| d90 | µm | 3,51 |
| d25 | µm | 0,80 |

**1.2** Mittels des unter Punkt **1.1** beschriebenen Verfahrens wurde in analoger Weise ein zweites durch hydrothermale Behandlung erhältliches Lignin **L2** hergestellt, welches wie in nachstehender Tabelle 1.2 angegeben mittels der vorstehend genannten Methoden charakterisiert wurde.

**Tabelle 1.2 - Eigenschaften des durch hydrothermale Behandlung erhältlichen Lignins L2**

| *Test* | *Einheit* | *Lignin **L2*** |
|---|---|---|
| STSA | m²/g | 44,7 |
| BET | m²/g | 49,1 |
| ¹⁴C-Gehalt | Bq/g C | 0,23 |
| Sauerstoffgehalt | Gew.-% | 22,2 |
| Kohlenstoffgehalt | Gew.-% | 71,2 |
| pH-Wert | ./. | 8,7 |
| OH-Gruppendichte | [mmol/g] | 0,32 |
| Materialdichte | g/cm³ | 1,33 |
| d97 | µm | 4,0 |
| d50 | µm | 1,1 |

**1.3** Mittels des unter Punkt **1.1** beschriebenen Verfahrens wurde in analoger Weise ein drittes durch hydrothermale Behandlung erhältliches Lignin **L3** hergestellt, welches wie in nachstehender Tabelle 1.3 angegeben mittels der vorstehend genannten Methoden charakterisiert wurde. In Abweichung des unter Punkt **1.1** beschriebenen Verfahrens erfolgte die hydrothermale Behandlung jedoch derart, dass die Lignin enthaltende hergestellte Lösung mit 1,5K/Min auf eine Reaktionstemperatur von 230 °C aufgeheizt worden ist, welche über eine Reaktionsdauer von 1 h gehalten wurde. Zudem wurde die Lignin enthaltende Flüssigkeit vor Durchführung der hydrothermalen Behandlung mittels Formaldehyd modifiziert. Schließlich erfolgte die abschließende Mahlung auf einer Dampfstrahlmühle.

**Tabelle 1.3 - Eigenschaften des durch hydrothermale Behandlung erhältlichen Lignins L3**

| *Test* | *Einheit* | *Lignin **L3*** |
|---|---|---|
| STSA | m²/g | 43,3 |
| BET | m²/g | 48,3 |
| pH-Wert | ./. | 8,8 |
| OH-Gruppendichte | [mmol/g] | 0,14 |
| Materialdichte | g/cm³ | 1,33 |
| d97 | µm | 5,6 |
| d50 | µm | 1,1 |

### 2. Herstellung von vulkanisierbaren Kautschukzusammensetzungen

**2.1** Vulkanisierbare Kautschukzusammensetzungen wurden mittels eines zweistufigen Verfahrens hergestellt.

In der ersten Stufe wurde zunächst eine Kautschukzusammensetzung als Grundmischung (Masterbatch) hergestellt, indem die Bestandteile der Kautschukzusammensetzung compoundiert wurden, welche die Kautschukkomponente K und die Füllstoffkomponente F umfassten. In der zweiten Stufe erfolgte die Zumischung der Bestandteile des Vernetzungssystems (Vulkanisations-Systems VS).

### Stufe 1

Als Kautschuk wurde EPDM eingesetzt. Die Herstellung der EPDM basierten Kautschukzusammensetzung erfolgte im Labormischer der Firma Haake, der ein Kammervolumen von 350 ml aufweist. Dabei wurde zuerst der Kautschuk zugegeben und für 1 min bei 50 Upm geknetet. Bei Einsatz von Industrieruß als alleinigem Füllstoff (Vergleichsbeispiel **KV1**) wird dieser zu 50% nach 1 Minute (zusammen mit 50% des eingesetzten Prozessöls) und zu 50% nach 3 Minuten (zusammen mit den weiteren 50% des eingesetzten Prozessöls) zugegeben. Bei Teilersatz von Industrieruß durch den erfindungsgemäß eingesetzten Füllstoff (erfindungsgemäße Beispiele **KL1** und **KL2**) wird 100% des erfindungsgemäß eingesetzten Füllstoffs nach 1 Minute (zusammen mit 50% des eingesetzten Prozessöls) und 100% des Industrierußes nach 3 Minuten (zusammen mit den weiteren 50% des eingesetzten Prozessöls) zugegeben. In beiden Fällen wurden nach 3 Minuten die übrigen Bestandteile der Grundmischung hinzugefügt (Zinkoxid und Stearinsäure; vgl. nachstehende Tabelle 2.1). Danach wurden die Mischungsbestandteile dispersiv und distributiv so lange gemischt, bis der Mischprozess nach 10 min gestoppt und die Kautschukzusammensetzung aus dem Labormischer entnommen worden ist. Die Kautschukzusammensetzung erreichte unter diesen Mischbedingungen eine finale Temperatur von 125°C bis 135°C. Nach erfolgter Herstellung der Kautschukzusammensetzung wurde diese vor Durchführung der zweiten Stufe abgekühlt (Alterung/Lagerung).

Mittels der vorstehend beschriebenen Stufe 1 wurden zwei erfindungsgemäß eingesetzte Kautschukzusammensetzungen erhalten (**KL1** und **KL1**), die jeweils EPDM als Kautschuk der Kautschukkomponente K und durch hydrothermale Behandlung erhältliches Lignin L1 als organischen Füllstoff der Füllstoffkomponente enthielten. Zudem wurde auf diese Weise eine Vergleichskautschukzusammensetzung erhalten (**KV1**), die EPDM als Kautschuk der Kautschukkomponente K und ausschließlich kommerziell erhältliches Ruß als organischen Füllstoff der Füllstoffkomponente enthielten (und kein Lignin L1). Die genauen Zusammensetzungen der Kautschukzusammensetzungen sind nachstehender Tabelle 2.1 zu entnehmen.

### Stufe 2

In der zweiten Stufe wurden in die Kautschukzusammensetzung der ersten Stufe die Bestandteile des Vernetzungs-Systems eingearbeitet, wodurch eine vulkanisierbare Kautschukzusammensetzung erhalten worden ist. Hierbei wurden die Mischungen **KL1, KL2** bzw. **KV1** aus der ersten Stufe zunächst erneut jeweils für 0-2 Minuten dispersiv gemischt. Für eine Dauer von 2 bis 2,5 Minuten erfolgte dann die Zugabe eines Vulkanisations-Systems (VS). Hierzu wurden als VS ein organisches Peroxid und eine als Co-Agens eingesetzte mehrfach ungesättigte organische Verbindung eingesetzt. Nach erfolgter Zugabe wurde für weitere 2,5 bis 5 Minuten gemischt. Die Endtemperatur betrug dabei zwischen 90 °C und 100 °C.

Mittels der vorstehend beschriebenen Stufe 2 wurden nach Zugabe des Vulkanisations-Systems VS zwei erfindungsgemäße vulkanisierbare Kautschukzusammensetzungen erhalten (**VKL1** und **VKL1**), die nach Beenden der Durchführung von Stufe 2 vulkanisiert werden können. Zudem wurde auf diese Weise eine vulkanisierbare Vergleichskautschukzusammensetzung erhalten (**VKV1**), die ebenfalls nach Beenden der Durchführung von Stufe 2 vulkanisiert werden kann. Die genauen Zusammensetzungen der vulkanisierbaren Kautschuk-zusammensetzungen sind nachstehender Tabelle 2.1 zu entnehmen.

**Tabelle 2.1 - Vulkanisierbare Kautschukzusammensetzungen VKL1, VKL2 (erfindungsgemäß) und VKV1 (Vergleichsbeispiel)**

| *Bestandteile* | *Zusammensetzung **VKL1** (Menge jeweils in phr; (erfindungsgemäß)* | *Zusammensetzung **VKL2** (Menge jeweils in phr; (erfindungsgemäß)* | *Zusammensetzung **VKV1** (Menge jeweils in phr; nicht erfindungsgemäß)* |
|---|---|---|---|
| EPDM | 150 | 150 | 150 |
| Organischer Füllstoff **L1** | 70 | 70 | - |
| Industrieruß | 60 | 60 | 130 |
| Prozessöl | 35 | 35 | 35 |
| Zinkoxid | 5 | 5 | 5 |
| Stearinsäure | 2 | 2 | 2 |
| Co-Agens | 2 | 2 | 2 |
| Peroxid | 7 | 8 | 7 |

Als EPDM (Kautschuk der Kautschukkomponente K) wurde das kommerziell erhältliche Produkt Keltan^{®} 4465 der Firma Arlanxeo Deutschland GmbH eingesetzt. Als Zinkoxid wurde das kommerziell erhältliche ZINKOXID Weisssiegel der Firma Brüggemann eingesetzt. Als Stearinsäure wurde das kommerziell erhältliche Palmera B 1805 der Firma Avokal^{®} GmbH eingesetzt. Als Industrieruß (Füllstoff der Füllstoffkomponente F) wurde das kommerziell erhältliche Produkt LUVOMAXX BC N-550 der Firma Lehmann & Voss & Co eingesetzt. Der organische Füllstoff **L1** ist bereits vorstehend beschrieben worden. Als Prozessöl wurde das kommerzielle Produkt Tudalen^{®} 1927 der Firma Hansen und Rosenthal KG eingesetzt. Als Peroxid wurde das kommerzielle Produkt Di-Cup^{®} 40 der Firma Ashland eingesetzt. Als Co-Agens wurde Trimethylolpropantri(meth)acrylat (TRIM) eingesetzt.

**2.2** Ähnlich des unter Punkt **2.1** beschriebenen Verfahrens wurden in einstufiger Weise weitere vulkanisierbare Kautschukzusammensetzungen **VKL3, VKL4** sowie **VKL5** (alle erfindungsgemäß) und **VKV2** (Vergleichsbeispiel) hergestellt.

Als Kautschuk wurde EPDM eingesetzt. Die Herstellung der EPDM basierten Kautschukzusammensetzung erfolgte im Labormischer der Firma Haake, der ein Kammervolumen von 350 ml aufweist. Dabei wurde zuerst der Kautschuk vorgelegt und für 1 min bei 50 Upm geknetet. Bei Einsatz von Industrieruß als alleinigem Füllstoff oder bei Einsatz des erfindungsgemäß eingesetzten Füllstoffs als alleinigem Füllstoff wurde dieser jeweils zu 50% nach 1 Minute (zusammen mit 50% des eingesetzten Prozessöls, 100% des eingesetzten Calciumoxids, 100% der eingesetzten Kreide, 100% des eingesetzten PEG und 100% der eingesetzten Stearinsäure) und zu 50% nach 4 Minuten (zusammen mit den weiteren 50% des eingesetzten Prozessöls) zugegeben. Bei Teilersatz von Industrieruß durch den erfindungsgemäß eingesetzten Füllstoff wurde 100% des erfindungsgemäß eingesetzten Füllstoffs nach 1 Minute (zusammen mit 50% des eingesetzten Prozessöls, 100% des eingesetzten Calciumoxids, 100% der eingesetzten Kreide, 100% des eingesetzten PEG und 100% der eingesetzten Stearinsäure) und 100% des Industrierußes nach 4 Minuten (zusammen mit den weiteren 50% des eingesetzten Prozessöls) zugegeben. Nach 6 Minuten erfolgte dann die Zugabe eines Vulkanisations-Systems (VS). Hierzu wurden als VS ein organisches Peroxid und eine als Co-Agens eingesetzte mehrfach ungesättigte organische Verbindung eingesetzt. Danach wurden die Mischungsbestandteile dispersiv und distributiv so lange gemischt, bis der Mischprozess nach 10 min gestoppt und die Kautschukzusammensetzung aus dem Labormischer entnommen wurde. Die Kautschukzusammensetzung erreichte unter diesen Mischbedingungen eine finale Temperatur von 110°C bis 115°C.

Die genauen Zusammensetzungen dieser vulkanisierbaren Kautschukzusammensetzungen sind nachstehender Tabelle 2.2 zu entnehmen.

**Tabelle 2.2 - Vulkanisierbare Kautschukzusammensetzungen VKL3, VKL4 sowie VKL5 (alle erfindungsgemäß) und VKV2 (Vergleichsbeispiel)**

| *Bestandteile* | *Zusammensetzung **VKL3** (Menge jeweils in phr; (erfindungsgemäß)* | *Zusammensetzung **VKL4** (Menge jeweils in phr; (erfindungsgemäß)* | *Zusammensetzung **VKL5** (Menge jeweils in phr; (erfindungsgemäß)* | *Zusammensetzung **VKV2** (Menge jeweils in phr; nicht erfindungsgemäß)* |
|---|---|---|---|---|
| EPDM | 100 | 100 | 100 | 100 |
| Organischer Füllstoff **L2** | 50 | 50 | 100 | - |
| Industrieruß | 50 | 50 | - | 100 |
| Kreide | 100 | 100 | 100 | 100 |
| Prozessöl | 100 | 100 | 100 | 100 |
| Stearinsäure | 1 | 1 | 1 | 1 |
| PEG | 4 | 4 | 4 | 4 |
| Calciumoxid | 6 | 6 | 6 | 6 |
| Co-Agens | 2,9 | 2,9 | 2,9 | 2,9 |
| Peroxid | 8 | 10 | 10 | 8 |

Als EPDM (Kautschuk der Kautschukkomponente K) wurde das kommerziell erhältliche Produkt Keltan^{®} 5470C der Firma Arlanxeo Deutschland GmbH eingesetzt. Als Kreide wurde das kommerziell erhältliche Calciumcarbonat Microcarb^{®} LB10 T der Firma Heinrich Heller GmbH eingesetzt. Als Stearinsäure wurde das kommerziell erhältliche Palmera B 1805 der Firma Avokal^{®} GmbH eingesetzt. Als Industrieruß (Füllstoff der Füllstoffkomponente F) wurde das kommerziell erhältliche Produkt LUVOMAXX BC N-55 der Firma Lehmann & Voss & Co eingesetzt. Der organische Füllstoff L2 ist bereits vorstehend beschrieben worden. Als Prozessöl wurde das kommerzielle Produkt Tudalen^{®} 1927 der Firma Hansen und Rosenthal KG eingesetzt. Als Peroxid wurde das kommerzielle Produkt Di-Cup^{®} 40 der Firma Ashland eingesetzt. Als Co-Agens wurde Trimethylolpropantri(meth)acrylat (TRIM) eingesetzt. Als PEG wurde Polyethylenglykol 4000 eingesetzt. Als Calciumoxid wurde das kommerzielle Produkt Kezadol^{®} GR 80 der Firma Kettliz GmbH verwendet.

**2.3** Ähnlich des unter Punkt **2.1** beschriebenen Verfahrens wurden in einstufiger Mischweise weitere vulkanisierbare Kautschukzusammensetzungen **VKL6** sowie **VKL7** (alle erfindungsgemäß) und **VKV3** (Vergleichsbeispiel) hergestellt. Im Fall von **VKV3** wurde jedoch anstelle von Peroxid (und Co-Agens) ein anderes Vulkanisations-System (VS) eingesetzt, nämlich Schwefel (sowie drei verschiedene Beschleuniger B1, B2 und B3).

Als Kautschuk wurde EPDM eingesetzt. Die Herstellung der EPDM basierten Kautschukzusammensetzung erfolgte im Labormischer der Firma Haake, der ein Kammervolumen von 350 ml aufweist. Dabei wurde zuerst der Kautschuk vorgelegt und für 1 min bei 50 Upm geknetet. Bei Einsatz von Peroxid als VS (**VKL6** und **VKL7**) wurden zu diesem 50% des erfindungsgemäß eingesetzten Füllstoffs nach 1 Minute (zusammen mit 50% des eingesetzten Prozessöls, 100% des eingesetzten Zinkoxids und 100% der eingesetzten Stearinsäure) und dann zu der resultierenden Mischung die verbleibenden 50% des Füllstoffs nach 4 Minuten (zusammen mit den weiteren 50% des eingesetzten Prozessöls; vgl. Tabelle 2.3) zugegeben. Nach 6 Minuten erfolgte dann die Zugabe eines Vulkanisations-Systems (VS). Hierzu wurden als VS ein organisches Peroxid und eine als Co-Agens eingesetzte mehrfach ungesättigte organische Verbindung eingesetzt. Danach wurden die Mischungsbestandteile dispersiv und distributiv so lange gemischt, bis der Mischprozess nach 10 min gestoppt und die Kautschukzusammensetzung aus dem Labormischer entnommen wurde. Die Kautschukzusammensetzung erreichte unter diesen Mischbedingungen eine finale Temperatur von 110°C bis 115°C. In analoger Weise wurde **VKV3** (Vergleichsbeispiel) hergestellt. Hier wurden nach 6 Minuten anstelle von Peroxid (und Co-Agens) Schwefel sowie die drei verschiedenen Beschleuniger B1, B2 und B3 zudosiert. Danach wurden die Mischungsbestandteile dispersiv und distributiv so lange gemischt, bis der Mischprozess nach 10 min gestoppt und die Kautschukzusammensetzung aus dem Labormischer entnommen wurde. Die Kautschukzusammensetzung erreichte unter diesen Mischbedingungen eine finale Temperatur von 108°C.

Die genauen Zusammensetzungen dieser vulkanisierbaren Kautschukzusammensetzungen sind nachstehender Tabelle 2.3 zu entnehmen.

**Tabelle 2.3 - Vulkanisierbare Kautschukzusammensetzungen VKL6 sowie VKL7 (alle erfindungsgemäß) und VKV3 (Vergleichsbeispiel)**

| *Bestandteile* | *Zusammensetzung **VKL6** (Menge jeweils in phr; (erfindungsgemäß)* | *Zusammensetzung **VKL7** (Menge jeweils in phr; (erfindungsgemäß)* | *Zusammensetzung **VKV3** (Menge jeweils in phr; nicht erfindungsgemäß)* |
|---|---|---|---|
| EPDM | 100 | 100 | 100 |
| Organischer Füllstoff **L3** | 80 | 80 | 80 |
| Prozessöl | 40 | 40 | 40 |
| Stearinsäure | 2 | 2 | 2 |
| Zinkoxid | 5 | 5 | 5 |
| Co-Agens | 2,9 | 2,9 | - |
| Peroxid | 8 | 10 | - |
| Beschleuniger B1 | - | - | 1,3 |
| Beschleuniger B2 | - | - | 1,1 |
| Beschleuniger B3 | - | - | 3,5 |
| Schwefel | - | - | 1 |

Als EPDM (Kautschuk der Kautschukkomponente K) wurde das kommerziell erhältliche Produkt Keltan^{®} 5470C der Firma Arlanxeo Deutschland GmbH eingesetzt. Als Stearinsäure wurde das kommerziell erhältliche Palmera B 1805 der Firma Avokal^{®} GmbH eingesetzt. Der organische Füllstoff **L3** ist bereits vorstehend beschrieben worden. Als Prozessöl wurde das kommerzielle Produkt Tudalen^{®} 1927 der Firma Hansen und Rosenthal KG eingesetzt. Als Peroxid wurde das kommerzielle Produkt Di-Cup^{®} 40 der Firma Ashland eingesetzt. Als Co-Agens wurde Trimethylolpropantri(meth)acrylat (TRIM) eingesetzt. Als Zinkoxid wurde das kommerziell erhältliche ZINKOXID Weisssiegel der Firma Brüggemann eingesetzt. Als Schwefel (Vernetzer) wurde Struktol^{®} SU95 der Firma Schill + Seilbacher verwendet. Als Beschleuniger wurden die Produkte MBTS 80 GE F GREEN der Firma Vibiplast S.r.l. (B1), Rhenogran^{®} ZBEC-70 der Firma RheinChemie Additive (B2) und Rhenogran^{®} TP-50 der Firma RheinChemie Additives (B3) verwendet.

### 3. Untersuchungen und Prüfungen der vulkanisierbaren und daraus erhältlichen vulkanisierter Kautschukzusammensetzungen

### 3.1 Vernetzungsdichte und Reaktionskinetik

Die nach der zweiten Stufe erhaltenen Kautschukzusammensetzungen wurden hinsichtlich ihrer Rohmischungseigenschaften geprüft. Dabei wurden gemäß der vorstehend beschriebenen Methode Reaktionskinetik und Vernetzungsdichte gemessen.

In den Tabellen 3.1 und 3.2 sind die erhaltenen Ergebnisse in Bezug auf minimales und maximales Drehmoment (M_{L}, M_{H}), Differenz Δ (M_{H}-M_{L}) und die Zeiträume T₁₀, T₅₀ und T₉₀ zusammengefasst.

**Tabelle 3.1**

| *Parameter* | ***VKL1** (erfindungsgemäß)* | ***VKL2** (erfindungsgemäß)* | ***VKV1** (nicht erfindungsgemäß)* |
|---|---|---|---|
| T₁₀ [min] | 0,62 | 0,59 | 0,62 |
| T₅₀ [min] | 1,41 | 1,27 | 1,44 |
| T₉₀ [min] | 3,31 | 3,05 | 3,31 |
| M_{L} [dNm] | 6,29 | 6,43 | 5,83 |
| M_{H} [dNm] | 27,19 | 29,57 | 33,00 |
| Δ (M_{H}-M_{L}) [dNm] | 20,90 | 23,14 | 27,17 |

Gegenüber **VKV1** zeigen die erfindungsgemäßen Kautschukzusammensetzungen **VKL1** und **VKL2** eine vergleichbare Reaktionskinetik (T₁₀, T₅₀, T₉₀). Geringe Abweichungen ergeben sich in der Vernetzungsdichte, die die Differenz Δ (M_{H}-M_{L}) aus dem maximalen und minimalen Drehmoment in dNm darstellt.

**Tabelle 3.2**

| *Parameter* | ***VKL3** (erfindungsgemäß)* | ***VKL4** (erfindungsgemäß)* | ***VKL5** (erfindungsgemäß)* | ***VKV2** (nicht Erfindungsgemäß)* |
|---|---|---|---|---|
| T₁₀ [min] | 0,99 | 0,90 | 0,91 | 0,91 |
| T₅₀ [min] | 2,94 | 2,62 | 2,73 | 2,51 |
| T₉₀ [min] | 11,5 | 11,7 | 12,3 | 8,4 |
| M_{L} [dNm] | 0,82 | 0,79 | 0,92 | 0,69 |
| M_{H} [dNm] | 9,55 | 10,68 | 10,24 | 9,73 |
| Δ (M_{H}-M_{L}) [dNm] | 8,73 | 9,89 | 9,32 | 9,04 |

Gegenüber **VKV2** zeigen die erfindungsgemäßen Kautschukzusammensetzungen **VKL3, VKL4** und **VKL5** eine vergleichbare Reaktionskinetik in Bezug auf T₁₀ und T₅₀ sowie eine vergleichbare Vernetzungsdichte, die die Differenz Δ (M_{H}-M_{L}) aus dem maximalen und minimalen Drehmoment in dNm darstellt. Abweichungen ergeben sich in Bezug auf T₉₀.

### 3.2 Zugfestigkeit, Bruchdehnung und Shore A-Härte sowie Druckverformungsreste

Die nach der zweiten Stufe erhaltenen Kautschukzusammensetzungen wurden 6 Minuten isotherm bei 175 °C (**VKV1, VKL1** und **VKL2**) vulkanisiert. Die nach einer Stufe erhaltenen Kautschukzusammensetzungen wurden 11 (**VKV2**), 14 (**VKL3** und **VKL4**) oder 15 (**VKL5**) Minuten jeweils bei 170 °C vulkanisiert. Dann wurden Zugfestigkeit, Bruchdehnung, Module 100 bis 300 und Shore A-Härte sowie Druckverformungsreste gemäß den vorstehend beschriebenen Methoden ermittelt.

In den Tabellen 3.3 und 3.4 sind die erhaltenen Ergebnisse zusammengefasst.

**Tabelle 3.3**

| *Parameter* | ***VKL1** (erfindungsgemäß )* | ***VKL2** (erfindungsgemäß )* | ***VKV1** (nicht erfindungsgemäß )* |
|---|---|---|---|
| Zugfestigkeit [MPa] | 9,0 | 10,3 | 11,7 |
| Modul 100 [MPa] | 1,7 | 2,1 | 1,8 |
| Modul 200 [MPa] | 4,4 | 5,3 | 5,3 |
| Modul 300[MPa] | 6,7 | 7,8 | 9,1 |
| Bruchdehnung [%] | 420 | 393 | 364 |
| Shore A-Härte | 59 | 60 | 59 |
| Druckverformungsres t 22 h, 70 °C [%] | 12,8 | 10,8 | 13,9 |
| Druckverformungsres t 22 h, 100 °C [%] | 19,1 | 18,1 | 20,3 |

Das Zug-Dehnungsverhalten zeigt auf, dass im Vergleich zu **VKV1** bei den erfindungsgemäßen Kautschukzusammensetzungen **VKL1** und **VKL2** die Zugfestigkeit niedriger liegt, die Bruchrechnung aber deutlich angehoben ist. Die Bruchdehnung ist bei der Peroxid Vernetzung von der Vernetzungsdichte und damit von der Dosierung der Vernetzungsbestandteile abhängig. Die im Vergleich niedrigere Vernetzungsdichte ist aus Tabelle 3.1 ersichtlich. Interessant ist die Tatsache, dass im Fall einer Anpassung der Vernetzungsdichte bei **VKL2** bei niedrigen Dehnungen höhere Modulwerte gegenüber **VKV1** erreicht werden. Gerade der Bereich niedriger Dehnung ist für einen Gummiartikel von großer Bedeutung, weil diese Dehnungen im Einsatz auftreten. Das besonderen an den gummitechnischen Daten ist aber, dass trotz im Vergleich niedriger Vernetzungsdichte für die Kautschukmischungen **VKL1** und **VKL2** enthaltend den organischen Füllstoff **L1** die Werte für den Druckverformungsrest sowohl bei 70 °C als auch bei 100 °C niedriger sind im Vergleich zur Zusammensetzung **VKV1,** die eine höhere Vernetzungsdichte aufweist.

Bei gleicher Dosierung des Peroxids und des Co-Agens (**VKV1** vs. **VKL1**) wird bei gleicher Härte (Shore A) mit dem Einsatz von **L1** ein verbesserter Druckverformungsrest (niedriger) bei gleichzeitig deutlich höherer Bruchdehnung erzielt. Schon eine leichte Erhöhung der Peroxid-Dosierung (**VKL2**) zeigt eine weitere Verbesserung des Druckverformungsrestes, wobei die Bruchdehnung immer noch deutlich höher ist als die von **VKV1.** Mit **L1** beinhaltenden Kautschukzusammensetzungen können somit die Zug-Dehnungswerte und der Druckverformungsrest flexibel eingestellt werden. Ein weiterer Vorteil der Kautschukzusammensetzungen **VKL1** und **VKL2** liegt darin, dass die Spannungswerte bei niedrigen Dehnungen bis etwa 200% höher eingestellt werden können und dies bei höherer Bruchdehnung als im Fall von **VKV1** (siehe Modul 100 von **VKL2**). Dies verbessert die Dichtfunktion.

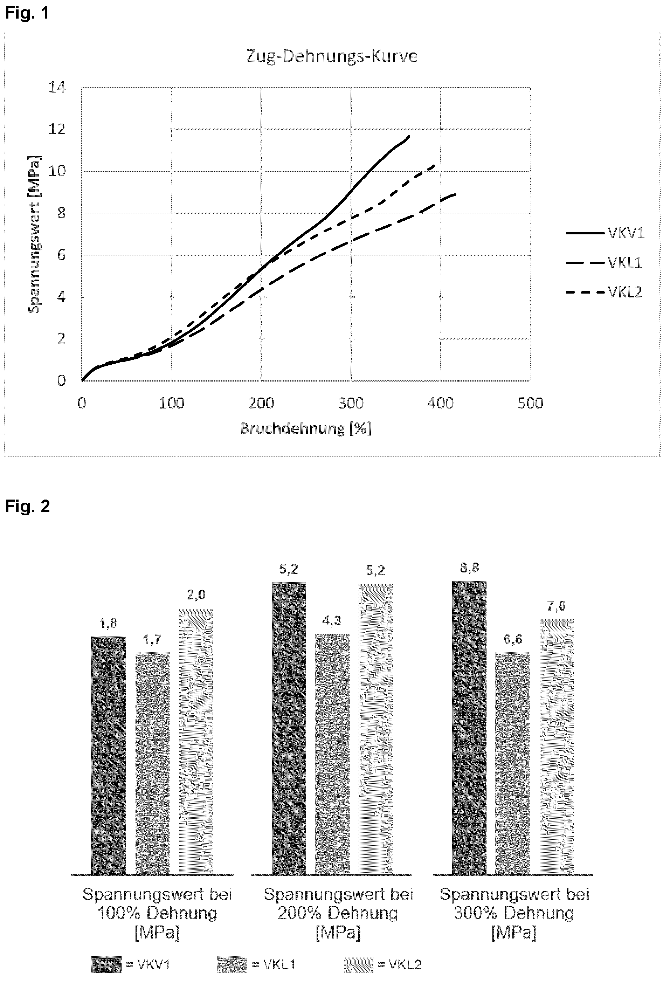

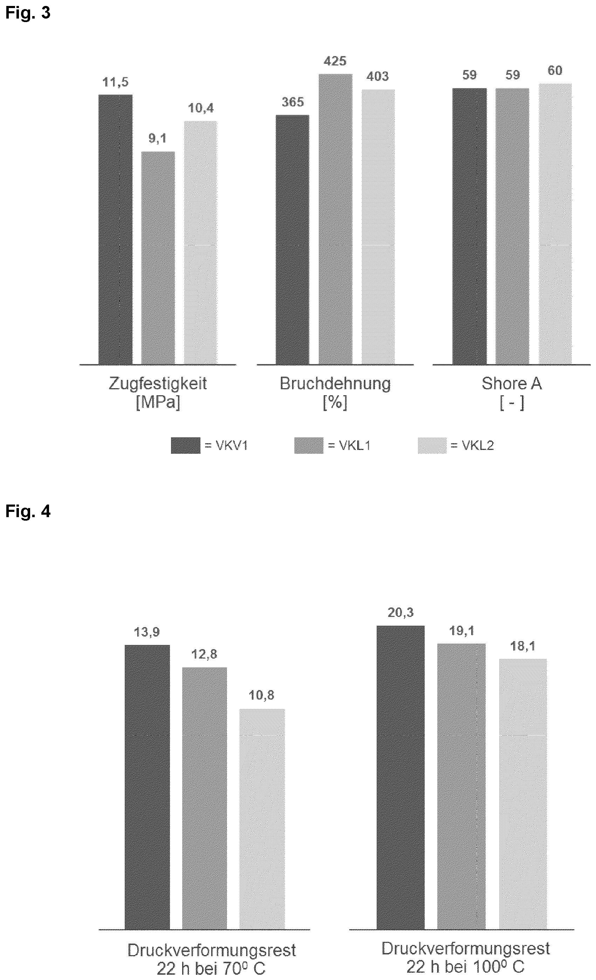

Die aus Tabelle 3.3 ersichtlichen Ergebnisse werden in den Abbildungen **Fig. 1, Fig. 2****,** **Fig. 3** und **Fig. 4** graphisch veranschaulicht. **Fig. 1** gibt einen Überblick über das ermittelte Zug-Dehnungsverhalten. **Fig. 2** gibt einen Überblick über die ermittelten Spannungswerte bei 100, 200 und 300% Dehnung. **Fig. 3** gibt einen Überblick über die ermittelten Werte für Zugfestigkeit, Bruchdehnung und Shore A-Härte. **Fig. 4** gibt einen Überblick über die ermittelten Werte betreffend den Druckverformungsrest bei verschiedenen Temperaturen.

**Tabelle 3.4**

| *Parameter* | ***VKL3** (erfindungsgemäß)* | ***VKL4** (erfindungsgemäß)* | ***VKL5** (erfindungsgemäß)* | ***VKV2** (nicht Erfindungsgemäß)* |
|---|---|---|---|---|
| Zugfestigkeit [MPa] | 6,7 | 7 | 5,7 | 8,1 |
| Modul 100 [MPa] | 1,7 | 1,8 | 1,6 | 1,9 |
| Modul 200 [MPa] | 3,3 | 3,5 | 2,8 | 4,1 |
| Modul 300[MPa] | 5 | 5,2 | 4,2 | 6,4 |
| Bruchdehnung [%] | 476 | 464 | 489 | 387 |
| Shore A-Härte | 65 | 65 | 64 | 65 |
| Druckverformungsrest 22 h, 70 °C [%] | 21,5 | 18,2 | 19,2 | 21,5 |
| Dichte [g/cm³] | 1,21 | 1,22 | 1,18 | 1,25 |

Das Zug-Dehnungsverhalten zeigt auch hier auf, dass im Vergleich zu **VKV2** bei den erfindungsgemäßen Kautschukzusammensetzungen **VKL3, VKL4** und **VKL5** die Zugfestigkeit etwas niedriger ist, die Bruchrechnung aber vorteilhafter Weise deutlich angehoben ist. Die Daten zeigen zudem insbesondere, dass für die Kautschukmischungen **VKL4** und **VKL5** enthaltend den organischen Füllstoff **L2** die Werte für den Druckverformungsrest bei 70 °C vorteilhafterweise niedriger sind im Vergleich zur Zusammensetzung **VKV2.**

### 3.3 Druckverformungsreste beim Vergleich der Peroxid-Vernetzung vs. Schwefel-Vernetzung (VKL6 und VKL7 vs. VKV3)

Die nach einer Stufe erhaltenen Kautschukzusammensetzungen **VKL6** und **VKL7** sowie **VKV3** wurden 8,5 (**VKL6** und **VKL7**) bzw. 13 (**VKV3**) Minuten isotherm bei 170 °C vulkanisiert. Dann wurden Druckverformungsreste sowohl 22 h bei 70 °C als auch 22 h bei 100 °C gemäß der vorstehend beschriebenen Methode ermittelt. Die Ergebnisse sind in Tabelle 3.5 dargestellt.

**Tabelle 3.5**

| *Parameter* | ***VKL6** (erfindungsgemäß)* | ***VKL7** (erfindungsgemäß)* | ***VKV3** (nicht Erfindungsgemäß)* |
|---|---|---|---|
| Druckverformungsrest 22 h, 70 °C [%] | 17,3 | 16,1 | 21,1 |
| Druckverformungsrest 22 h, 100 °C [%] | 17,7 | 15,6 | 58,6 |

Ein Vergleich der Daten zeigt insbesondere, dass für die mittels Peroxid vernetzten Kautschukmischungen **VKL6** und **VKL7** enthaltend den organischen Füllstoff **L3** die Werte für den Druckverformungsrest bei 70 °C und 100 °C vorteilhafterweise niedriger sind als im Fall der mittels Schwefel vernetzten Vergleichsmischung **VKV3.**

## Patentansprüche

1. Eine vulkanisierbare Kautschukzusammensetzung umfassend eine Kautschukkomponente K, eine Füllstoffkomponente F und ein Vulkanisations-System VS, wobei
das Vulkanisations-System VS wenigstens ein Peroxid umfasst,
die Kautschukkomponente K wenigstens einen Kautschuk enthält, welcher mittels des wenigstens einen Peroxids des Vulkanisations-Systems VS vernetzbar ist, und
die Füllstoffkomponente F wenigstens einen organischen Füllstoff enthält, welcher einen ¹⁴C-Gehalt in einem Bereich von 0,20 bis 0,45 Bq/g Kohlenstoff und einen d99-Wert von <25,0 µm aufweist.

2. Die Kautschukzusammensetzung gemäß Anspruch 1, **dadurch gekennzeichnet, dass** der organische Füllstoff einen d99-Wert von <20,0 µm, vorzugsweise von <15,0 µm, besonders bevorzugt von <10 µm, ganz besonders bevorzugt von <9,0 µm, noch bevorzugter von <8,0 µm, noch bevorzugter von <7,0 µm, am meisten bevorzugt von <6,0 µm, aufweist, vorzugsweise jeweils bestimmt mittels Laserbeugung nach ISO 13320:2009.

3. Die Kautschukzusammensetzung gemäß Anspruch 1 oder 2, **dadurch gekennzeichnet, dass** der organische Füllstoff einen d90-Wert von <7,0 µm, vorzugsweise von <6,0 µm, besonders bevorzugt von <5,0 µm, aufweist, und/oder einen d25-Wert von <3,0 µm, vorzugsweise von <2,0 µm, besonders bevorzugt von <1,0 µm, aufweist, vorzugsweise jeweils bestimmt mittels Laserbeugung nach ISO 13320:2009.

4. Die Kautschukzusammensetzung gemäß einem oder mehreren der vorstehenden Ansprüche, **dadurch gekennzeichnet, dass** der organische Füllstoff eine BET-Oberfläche in einem Bereich von 10 bis 150 m²/g, ganz besonders bevorzugt in einem Bereich von 20 bis 120 m²/g, noch bevorzugter in einem Bereich von 30 bis 110 m²/g, insbesondere in einem Bereich von 40 bis 100 m²/g, am meisten bevorzugt in einem Bereich von 40 bis <100 m²/g aufweist.

5. Die Kautschukzusammensetzung gemäß einem oder mehreren der vorstehenden Ansprüche, **dadurch gekennzeichnet, dass** der organische Füllstoff einen Sauerstoffgehalt in einem Bereich von >8 Gew.-% bis <30 Gew.-%, vorzugsweise von >10 Gew.-% bis <30 Gew.-%, besonders bevorzugt von >15 Gew.-% bis <30 Gew.-%, ganz besonders bevorzugt von >20 Gew.-% bis <30 Gew.-%, aufweist, jeweils bezogen auf den aschefreien und wasserfreien Füllstoff.

6. Die Kautschukzusammensetzung gemäß einem oder mehreren der vorstehenden Ansprüche, **dadurch gekennzeichnet, dass** der organische Füllstoff einen Kohlenstoffgehalt in einem Bereich von >60 Gew.-% bis <90 Gew.-%, vorzugsweise von >60 Gew.-% bis <85 Gew.-%, besonders bevorzugt von >60 Gew.-% bis <82 Gew.-%, ganz besonders bevorzugt von >60 Gew.-% bis <80 Gew.-%, aufweist, jeweils bezogen auf den aschefreien und wasserfreien Füllstoff.

7. Die Kautschukzusammensetzung gemäß einem oder mehreren der vorstehenden Ansprüche, **dadurch gekennzeichnet, dass** sie den wenigstens einen organischen Füllstoff in einer Menge enthält, die in einem Bereich von 10 bis 150, besonders bevorzugt von 15 bis 130, ganz besonders bevorzugt von 20 bis 120, noch bevorzugter von 30 bis 100 phr, am meisten bevorzugt von 40 bis 80 phr, liegt.

8. Die Kautschukzusammensetzung gemäß einem oder mehreren der vorstehenden Ansprüche, **dadurch gekennzeichnet, dass** der organische Füllstoff ein ligninbasierter Füllstoff ist, wobei vorzugsweise zumindest das Lignin und noch bevorzugter der organische Füllstoff als solcher zumindest teilweise in einer mittels hydrothermalen Behandlung erhältlichen Form vorliegt, besonders bevorzugt mittels hydrothermaler Behandlung erhältlich ist, wobei die hydrothermale Behandlung vorzugsweise bei einer Temperatur in einem Bereich von >100°C bis <300°C, besonders bevorzugt von >150°C bis <250°C, durchgeführt worden ist.

9. Die Kautschukzusammensetzung gemäß einem oder mehreren der vorstehenden Ansprüche, **dadurch gekennzeichnet, dass** das wenigstens eine Peroxid des Vulkanisations-Systems VS wenigstens ein organisches Peroxid umfasst, insbesondere darstellt, vorzugsweise ein organisches Peroxid ausgewählt aus der Gruppe bestehend aus Dialkyl-Peroxiden, Alkyl-Aryl-Peroxiden, Diaryl-Peroxiden, Alkyl-Persäureester, Aryl-Persäureester, Diacylperoxiden, polyvalenten Peroxide und Mischungen davon, besonders bevorzugt ein organisches Peroxid ausgewählt aus der Gruppe bestehend aus Di-tert.-butylperoxid, 2,5-Dimethyl-2,5-di(tert.-butyl-peroxy)hexan, Dicumylperoxid, tert.-Butylcumylperoxid, tert.-Butylperoxybenzoat, Dibenzoylperoxid, 1,1-Di(tert.-butylperoxy)-3,3,5-trimethylcyclohexan und Bis- (tert.-butylperoxy)-diisopropylbenzol sowie Mischungen davon.

10. Die Kautschukzusammensetzung gemäß einem oder mehreren der vorstehenden Ansprüche, **dadurch gekennzeichnet, dass** der wenigstens eine Kautschuk der Kautschukkomponente K ausgewählt ist aus der Gruppe bestehend aus Kautschuken ohne Kohlenstoff-Kohlenstoff-Doppelbindungen in ihrer Hauptkette, vorzugsweise ohne Kohlenstoff-Kohlenstoff-Doppelbindungen innerhalb ihrer gesamten Struktur, besonders bevorzugt ausgewählt ist aus der Gruppe bestehend aus HNBR (hydrierten Acrylnitril-Butadien-Kautschuken), Ethylen-Propylen-Dien-Kautschuken (EPDM), Ethylen-Propylen-Kautschuken (EPM), Acrylat-Ethylen-Kautschuken (AEM), Ethylen-Vinylacetat-Kautschuken (EVM), Chlorkautschuken, insbesondere chlorierten Polyethylenen (CM), Silikon-Kautschuken (Q), chlorsulfonierten Polyethylenen (CSM), Fluorkautschuk-Elastomeren (FPM) und Mischungen davon.

11. Die Kautschukzusammensetzung gemäß einem oder mehreren der vorstehenden Ansprüche, **dadurch gekennzeichnet, dass** sie wenigstens eine wenigstens einfach und vorzugsweise mehrfach ungesättigte organische Verbindung umfasst, die vorzugsweise Teil des Vulkanisations-Systems VS der Kautschukzusammensetzung ist, und welche vorzugsweise ausgewählt ist aus der Gruppe bestehend aus Di-(meth)acrylaten, Dimaleinimiden, Triallylverbindungen und ungesättigten Polymeren wie 1,2-Polybutadien und Trans-Polyoctenamer, jeweils vorzugsweise mit einem zahlenmittleren Molekulargewicht (Mn) von <10 000 g/mol, besonders bevorzugt von <5 000 g/mol, ganz besonders bevorzugt von <2 500 g/mol, noch bevorzugter von <1 500 g/mol, insbesondere von < 1 000 g/mol, am meisten bevorzugt von < 500 g/mol, sowie Mischungen davon, besonders bevorzugt ausgewählt ist aus der Gruppe bestehend aus Ethylenglycoldi(meth)acrylat (EDMA), Trimethylolpropantri(meth)acrylat (TRIM), N,N'-m-Phenylenbismaleimid (MPBM), Diallylterephthalat (DATP), Triallylcyanurat (TAC), 1,4-Butandioldi(meth)acrylat und Mischungen davon.

12. Ein Kit-of-parts umfassend in räumlich getrennter Form
als Teil (A) eine Kautschukzusammensetzung, die wenigstens die Kautschukkomponente K und wenigstens die Füllstoffkomponente F umfasst, jeweils wie in einem oder mehreren der Ansprüche 1 bis 11 definiert, wobei Teil (A) jedoch nicht das wenigstens eine Peroxid des Vulkanisations-Systems VS wie in einem oder mehreren der Ansprüche 1 bis 11 definiert umfasst, und
als Teil (B) ein Vulkanisations-System VS wie in einem oder mehreren der Ansprüche 1 bis 11 definiert umfassend wenigstens ein Peroxid.

13. Eine vulkanisierte Kautschukzusammensetzung, welche erhältlich ist durch Vulkanisation der vulkanisierbaren Kautschukzusammensetzung gemäß einem oder mehreren der Ansprüche 1 bis 11 oder durch Vulkanisation einer durch Zusammengeben und Vermischen der beiden Teile (A) und (B) des Kit-of-parts gemäß Anspruch 12 erhältlichen vulkanisierbaren Kautschukzusammensetzung.

14. Eine Verwendung der vulkanisierbaren Kautschukzusammensetzung gemäß einem oder mehreren der Ansprüche 1 bis 11, des Kit-of-parts gemäß Anspruch 12, oder der vulkanisierten Kautschukzusammensetzung gemäß Anspruch 13 zum Einsatz bei der Herstellung von technischen Gummiartikeln, vorzugsweise bei der Herstellung von technischen Gummiartikeln mit Dichtfunktion, insbesondere von Dichtungen, Profilen, Dämpfern, Ringen und Schläuchen.

15. Ein technischer Gummiartikel, vorzugsweise mit Dichtfunktion, insbesondere eine Dichtung, Profil, Dämpfer, Ring oder Schlauch, hergestellt unter Einsatz der vulkanisierbaren Kautschukzusammensetzung gemäß einem oder mehreren der Ansprüche 1 bis 11, des Kit-of-parts gemäß Anspruch 12, oder der vulkanisierten Kautschukzusammensetzung gemäß Anspruch 13.

16. Eine Verwendung des organischen Füllstoffs wie in einem oder mehreren der Ansprüche 1 bis 6 und 8 definiert zur Erhöhung der Bruchdehnung und gleichzeitiger Erniedrigung des Druckverformungsrestes in vulkanisierten Kautschukzusammensetzungen, die erhältlich sind durch Vulkanisation mittels wenigstens eines Peroxids, wobei die hierzu eingesetzten vulkanisierbaren Kautschukzusammensetzungen neben dem wenigstens einen Peroxid und dem organischen Füllstoff zudem wenigstens einen Kautschuk enthalten, welcher mittels des wenigstens einen Peroxids vernetzbar ist.
